# EUROPEAN PATENT APPLICATION

(11) **EP 4 626 124 A1**
(43) Date of publication of application: **01.10.2025**
(21) Application number: 23895023.2
(22) Date of filing: 22.11.2023
(51) Int. Cl.: H04W 74/08, H04W 24/08, H04W 24/10, H04W 72/25, H04W 76/28, H04L 1/18, H04W 92/18, H04W 72/12, H04W 72/50

(54) **METHOD AND DEVICE FOR PERFORMING SIDELINK COMMUNICATION IN UNLICENSED BAND**

(30) Priority: 22.11.2022 KR 20220157672; 29.11.2022 KR 20220163361; 20.12.2022 KR 20220179555; 16.02.2023 KR 20230020946; 20.02.2023 KR 20230022380; 22.02.2023 KR 20230023388; 23.02.2023 KR 20230024312
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2023/018869
(87) International publication number: WO 2024/112096

(57) **Abstract**

A method performed by means of a first device in a wireless communication system, and a device for supporting same are provided. The method may comprise the steps of: acquiring information related to a first discontinuous transmission (DTX) maximum frequency for detecting a sidelink (SL) radio link failure (RLF); transmitting, to a second device, on a physical sidelink control channel (PSCCH), second sidelink control information (SCI) and first SCI for the scheduling of a physical sidelink shared channel (PSSCH); transmitting, to the second device, on the PSSCH, the second SCI and data; increasing a DTX frequency by 1 on the basis that a physical sidelink feedback channel (PSFCH) reception fails during a PSFCH reception opportunity related to the PSSCH and that the energy level between a PSSCH transmission resource and a PSFCH reception resource does not reach a threshold value; and detecting the SL RLF on the basis that the DTX frequency reaches the first DTX maximum frequency.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment, a method performed by a first device may be provided. The method may include: obtaining information related to a first maximum number of discontinuous transmissions (DTXs) for detecting a sidelink radio link failure (SL RLF); transmitting, to a second device, first sidelink control information (SCI) on a physical sidelink control channel (PSCCH) for scheduling second SCI and a physical sidelink shared channel (PSSCH); transmitting, to the second device, the second SCI and data on the PSSCH; incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and detecting the SL RLF based on that the number of DTXs reaches the first maximum number of DTXs.

According to an embodiment, a first device configured to perform wireless communication may be provided. The first device may include: at least one transceiver; at least one processor; and at least one memory connected to the at least one processor and storing instructions, and, the instructions, based on being executed by the at least one processor, cause the first device to perform operations comprising: obtaining information related to a first maximum number of discontinuous transmissions (DTXs) for detecting a sidelink radio link failure (SL RLF); transmitting, to a second device, first sidelink control information (SCI) on a physical sidelink control channel (PSCCH) for scheduling second SCI and a physical sidelink shared channel (PSSCH); transmitting, to the second device, the second SCI and data on the PSSCH; incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and detecting the SL RLF based on that the number of DTXs reaches the first maximum number of DTXs.

According to an embodiment, a processing device configured to control a first device may be provided. The processing may include: at least one processor; and at least one memory connected to the at least one processor and storing instructions, and, the instructions, based on being executed by the at least one processor, cause the first device to perform operations comprising: obtaining information related to a first maximum number of discontinuous transmissions (DTXs) for detecting a sidelink radio link failure (SL RLF); transmitting, to a second device, first sidelink control information (SCI) on a physical sidelink control channel (PSCCH) for scheduling second SCI and a physical sidelink shared channel (PSSCH); transmitting, to the second device, the second SCI and data on the PSSCH; incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and detecting the SL RLF based on that the number of DTXs reaches the first maximum number of DTXs.

According to an embodiment, a non-transitory computer-readable storage medium storing instructions may be provided. The instructions, based on being executed, cause a first device to perform operations comprising: obtaining information related to a first maximum number of discontinuous transmissions (DTXs) for detecting a sidelink radio link failure (SL RLF); transmitting, to a second device, first sidelink control information (SCI) on a physical sidelink control channel (PSCCH) for scheduling second SCI and a physical sidelink shared channel (PSSCH); transmitting, to the second device, the second SCI and data on the PSSCH, incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and detecting the SL RLF based on that the number of DTXs reaches the first maximum number of DTXs.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an interlaced RB, based on an embodiment of the present disclosure.
FIG. 11 shows an example of a wireless communication system supporting an unlicensed band, based on an embodiment of the present disclosure.
FIG. 12 shows a method of occupying resources in an unlicensed band, based on an embodiment of the present disclosure.
FIG. 13 shows a case in which a plurality of LBT-SBs are included in an unlicensed band, based on an embodiment of the present disclosure.
FIG. 14 shows CAP operations performed by a base station to transmit a downlink signal through an unlicensed band, based on an embodiment of the present disclosure.
FIG. 15 shows type 1 CAP operations performed by a UE to transmit an uplink signal, based on an embodiment of the present disclosure.
FIG. 16 shows a channel access procedure, based on an embodiment of the present disclosure.
FIG. 17 shows an embodiment related to NR Uu radio link failure, based on an embodiment of the present disclosure.
FIG. 18 shows an SL LBT failure detection and recovery procedure, based on an embodiment of the present disclosure.
FIG. 19 shows an embodiment related to a transmission operation of a UE within a shared COT, based on an embodiment of the present disclosure.
FIG. 20 shows an embodiment related to energy detection operations for distinguishing PSFCH reception failures at a transmitting UE, based on an embodiment of the present disclosure.
FIG. 21 shows an embodiment for detecting SL RLF, based on an embodiment of the present disclosure.
FIG. 22 shows an embodiment of re-initializing the number of DTXs, based on an embodiment of the present disclosure.
FIG. 23 shows an example of detecting an SL RLF, based on an embodiment of the present disclosure.
FIG. 24 shows a sidelink resource pool configuration for guaranteeing an energy detection period for PSFCH reception of a transmitting UE, based on an embodiment of the present disclosure.
FIG. 25 shows a method for performing wireless communication by a first device, based on an embodiment of the present disclosure.
FIG. 26 shows a method for performing wireless communication by a second device, based on an embodiment of the present disclosure.
FIG. 27 shows a communication system 1, based on an embodiment of the present disclosure.
FIG. 28 shows wireless devices, based on an embodiment of the present disclosure.
FIG. 29 shows a signal process circuit for a transmission signal, based on an embodiment of the present disclosure.
FIG. 30 shows another example of a wireless device, based on an embodiment of the present disclosure.
FIG. 31 shows a hand-held device, based on an embodiment of the present disclosure.
FIG. 32 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, "when, if, or in case of may be replaced with "based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency, low backhaul and access network congestion, and enhanced data security.

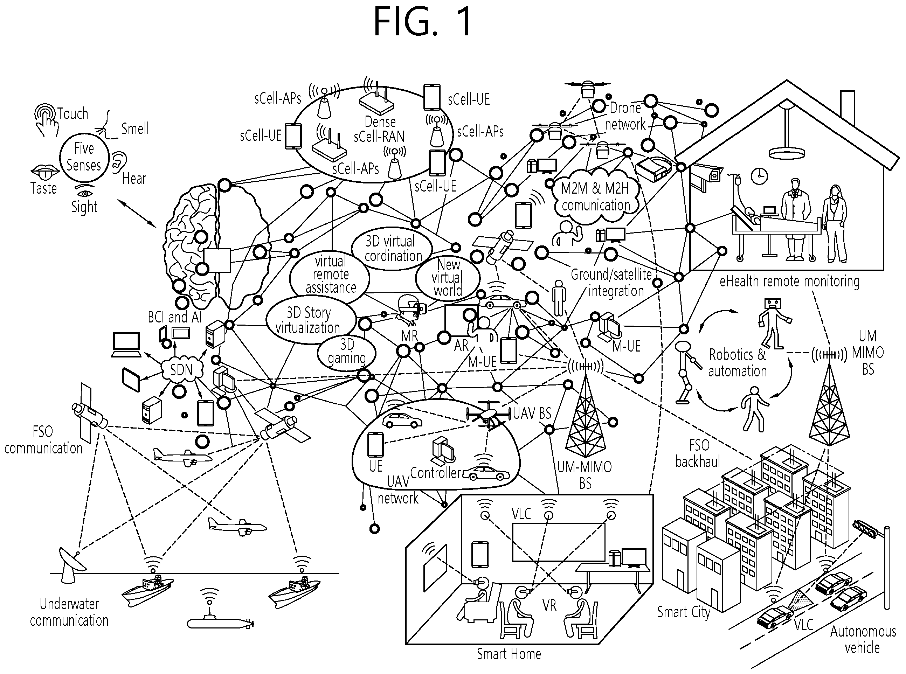

FIG. 1 shows a communication structure providable in a 6G system, based on an embodiment of the present disclosure. The embodiment of FIG. 1 may be combined with various embodiments of the present disclosure.

The 6G system will have 50 times higher simultaneous wireless communication connectivity than a 5G wireless communication system. URLLC, which is the key feature of 5G, will become more important technology by providing end-to-end latency less than 1 ms in 6G communication. The 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5 GB network in order to ensure flexibility, reconfigurability and programmability.

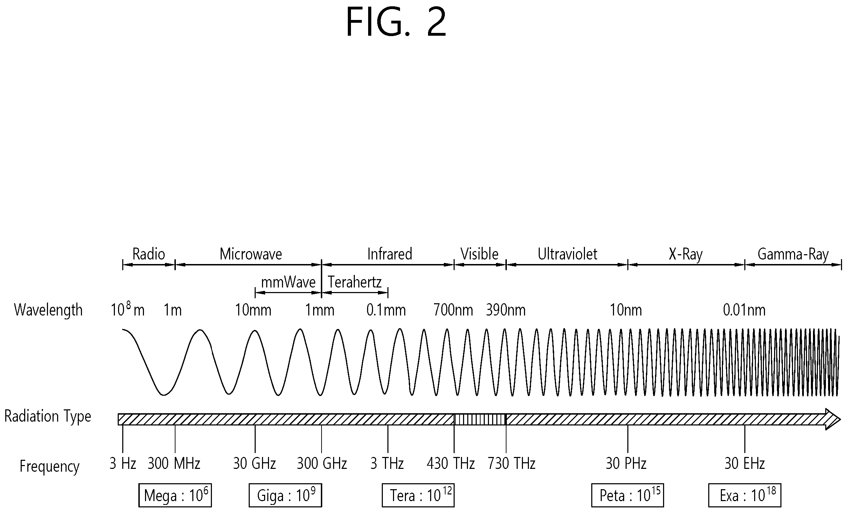

Core implementation technology of 6G system is described below.
- Artificial Intelligence (AI): Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical backhaul network (FSO Backhaul Network)
- Non-terrestrial networks (NTN)
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Autonomous driving (self-driving): For perfect autonomous driving, it is necessary to notify dangerous situation of each other through communication between vehicle and vehicle, to check information like parking information location and signal change time through communication between vehicle and infrastructure such as parking lots and/or traffic lights. Vehicle to everything (V2X) that is a core element for establishing an autonomous driving infrastructure is a technology that vehicle communicates and shares with various elements in road for autonomous driving such as vehicle to vehicle (V2V), vehicle to infrastructure (V2I). To maximize a performance of autonomous driving and to secure high safety, high transmission speed and low latency technology have to be needed. Furthermore, to directly control vehicle in dangerous situation and to actively intervene vehicle driving beyond a level of a warning or a guidance message to driver, as the amount of the information to transmit and receive is larger, autonomous driving is expected to be maximized in 6G being higher transmission speed and lower latency than 5G.

For clarity in the description, 5G NR is mainly described, but the technical idea according to an embodiment of the present disclosure is not limited thereto. Various embodiments of the present disclosure can also be applied to 6G communication systems.

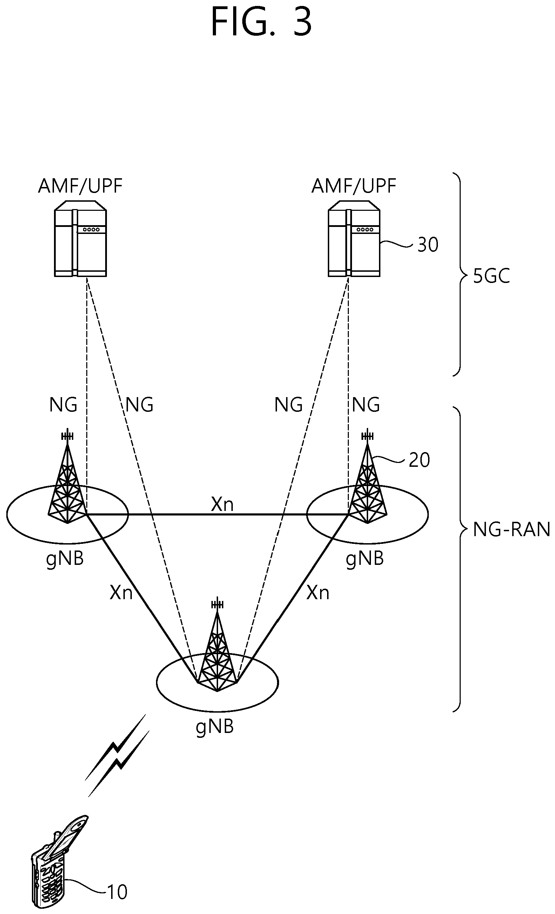

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

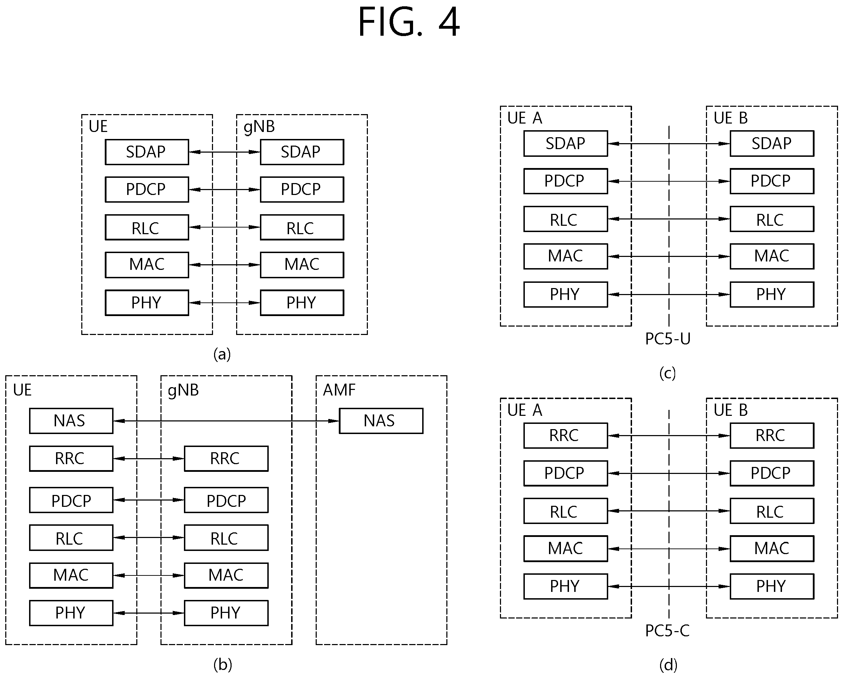

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

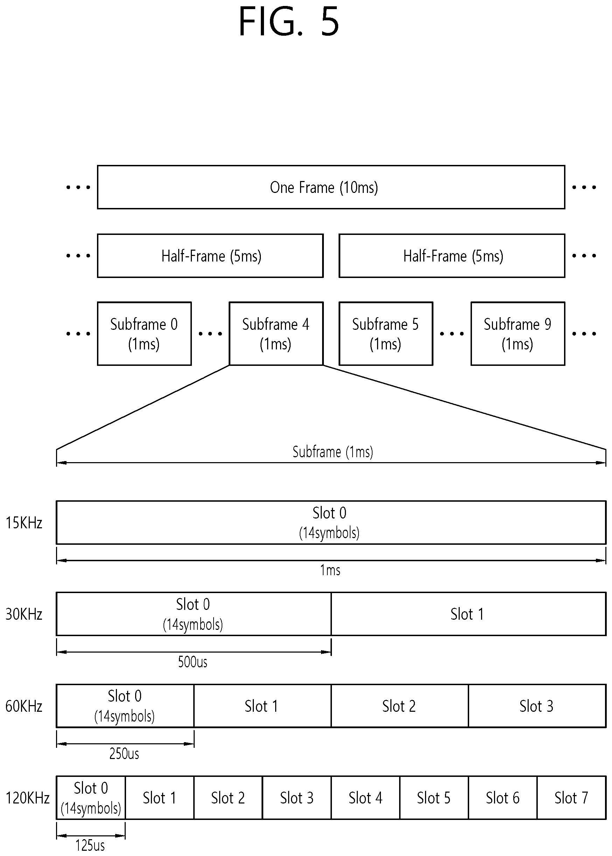

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT- s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

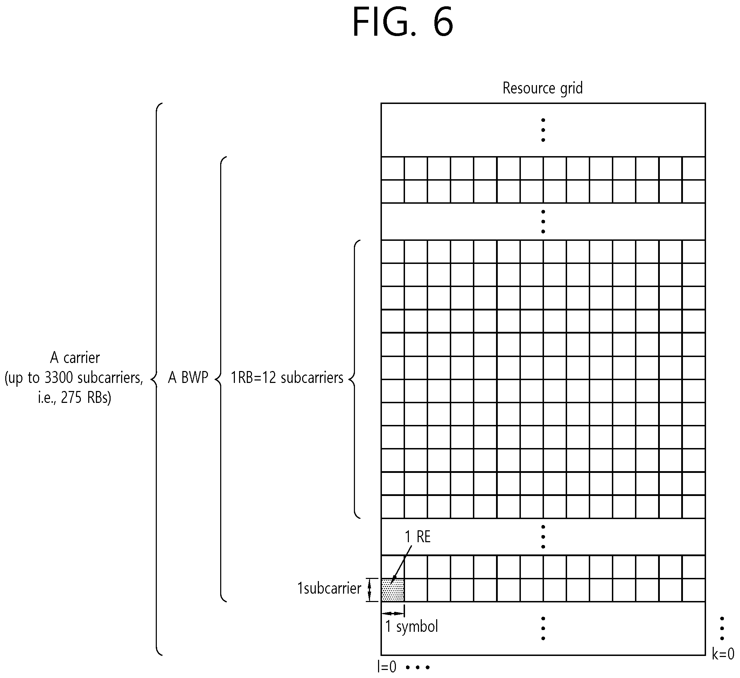

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

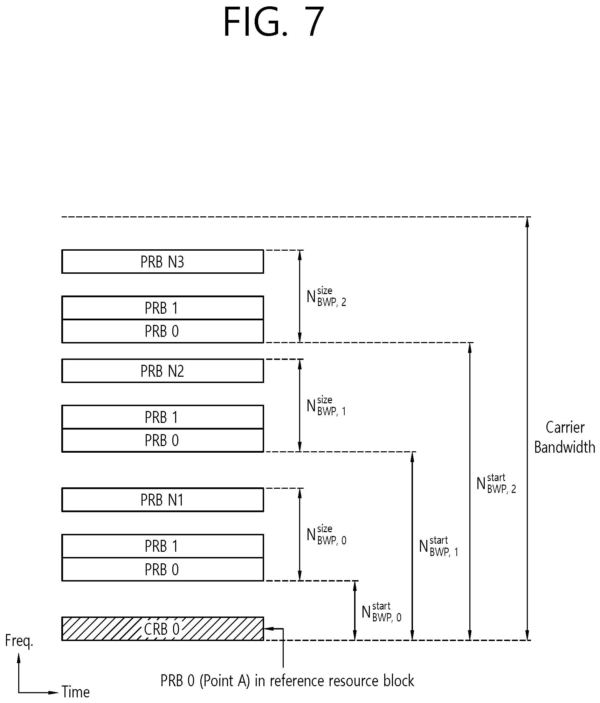

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{sizw}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

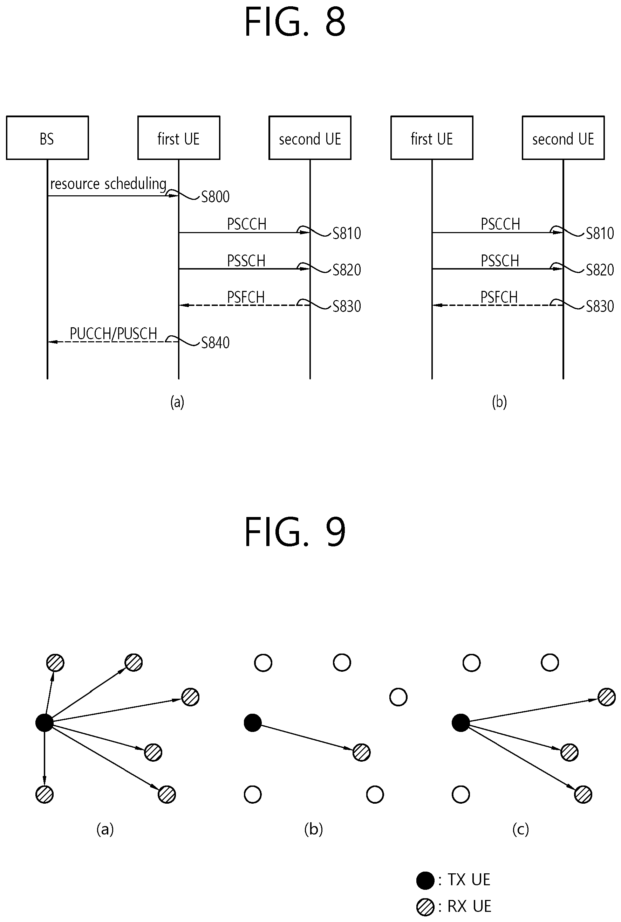

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCHresource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

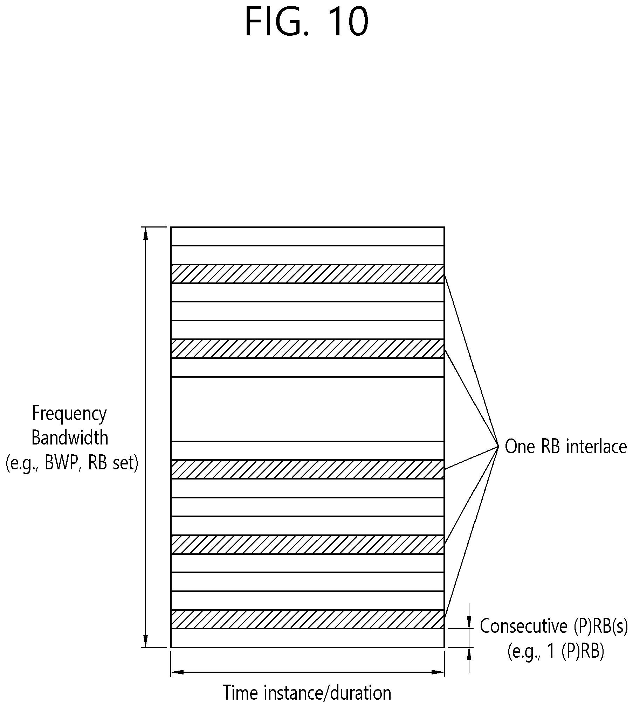

FIG. 10 shows an interlaced RB, based on an embodiment of the present disclosure. The embodiment of FIG. 10 may be combined with various embodiments of the present disclosure.

Referring to FIG. 10, interlaces of RBs may be defined in a frequency domain. An interlace m∈{0, 1, ..., M-1} may comprise (common) RBs {m, M+m, 2M+m, 3M+m, ...}, where M may represent the number of interlaced RBs given by Table 8.

**[Table 8]**

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

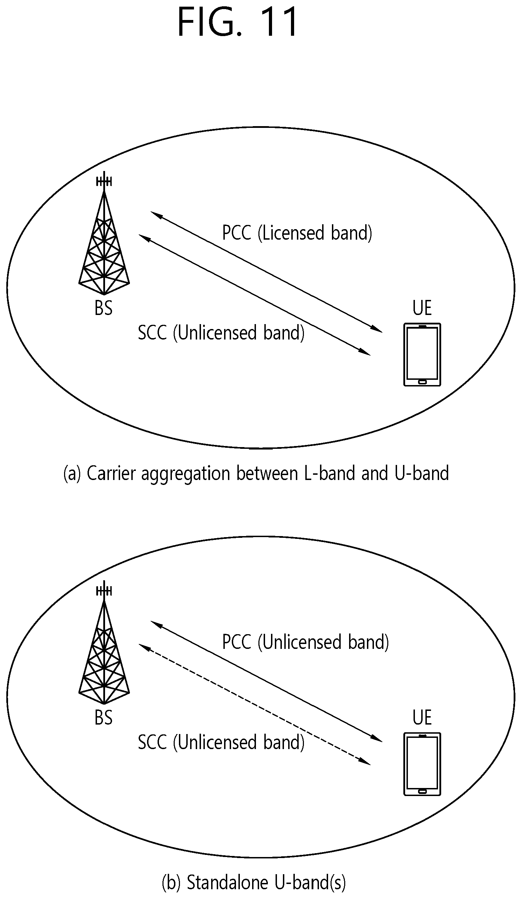

FIG. 11 shows an example of a wireless communication system supporting an unlicensed band, based on an embodiment of the present disclosure. For example, FIG. 11 may include an unlicensed spectrum (NR-U) wireless communication system. The embodiment of FIG. 11 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 11, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 11. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 11, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

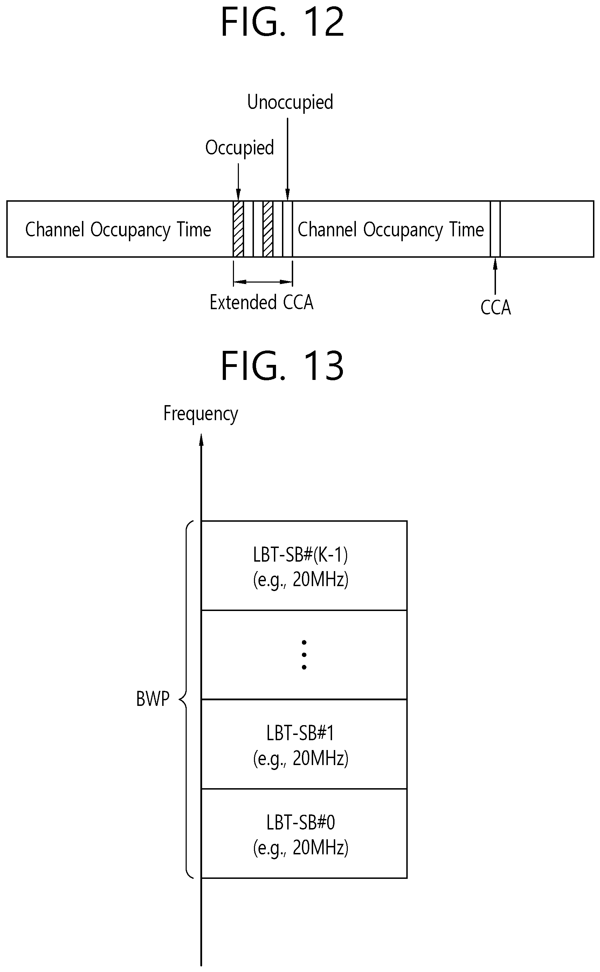

FIG. 12 shows a method of occupying resources in an unlicensed band, based on an embodiment of the present disclosure. The embodiment of FIG. 12 may be combined with various embodiments of the present disclosure.

Referring to FIG. 12, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 9 shows an example of the channel access procedure (CAP) supported in NR-U.

**[Table 9]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 9, the LBT type or CAP for DL/UL/SL transmission may be defined. However, Table 9 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 13 shows a case in which a plurality of LBT-SBs are included in an unlicensed band, based on an embodiment of the present disclosure. The embodiment of FIG. 13 may be combined with various embodiments of the present disclosure.

Referring to FIG. 13, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 10 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 10]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

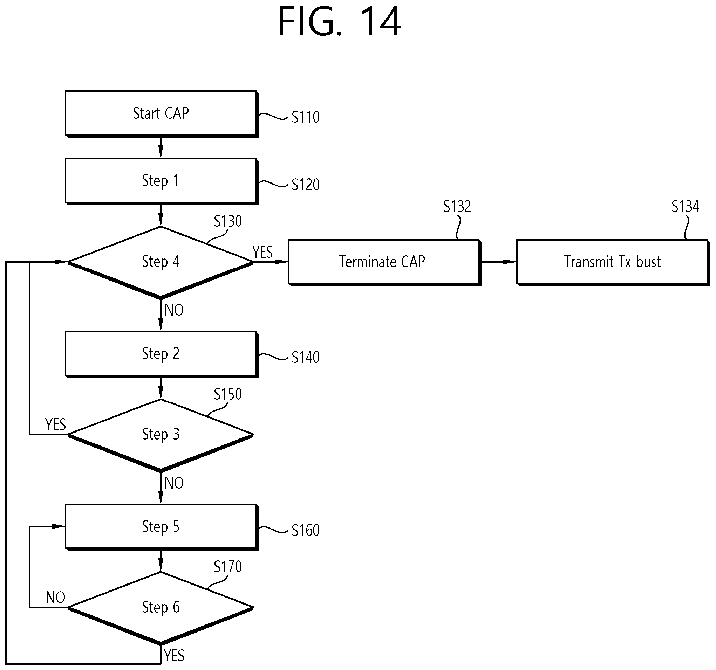

FIG. 14 shows CAP operations performed by a base station to transmit a downlink signal through an unlicensed band, based on an embodiment of the present disclosure. The embodiment of FIG. 14 may be combined with various embodiments of the present disclosure.

Referring to FIG. 14, the base station may sense whether a channel is idle for sensing slot durations of a defer duration T_{d}. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 11 shows that mₚ, a minimum contention window (CW), a maximum CW, a maximum channel occupancy time (MCOT), and an allowed CW size, which are applied to the CAP, vary depending on channel access priority classes.

**[Table 11]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 11, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f}(16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

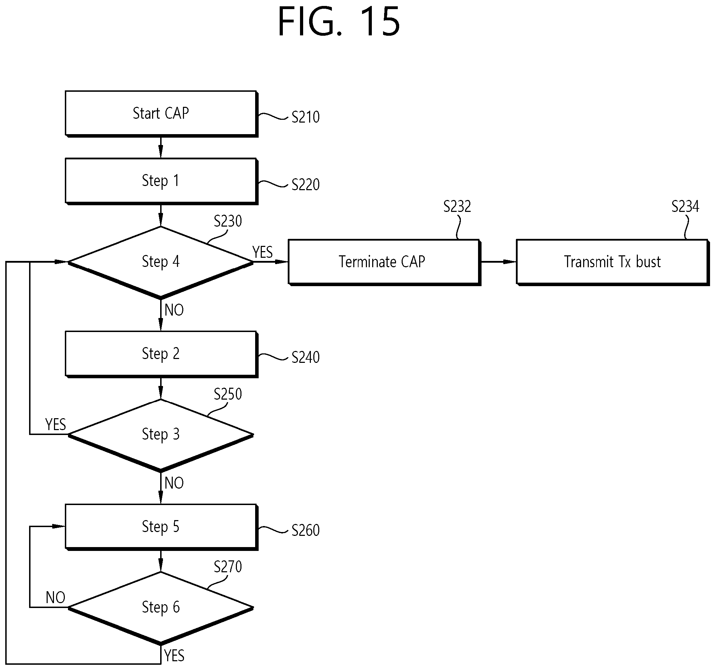

FIG. 15 shows type 1 CAP operations performed by a UE to transmit an uplink signal, based on an embodiment of the present disclosure. The embodiment of FIG. 15 may be combined with various embodiments of the present disclosure.

Referring to FIG. 15, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 12 shows that mₚ, a minimum CW, a maximum CW, a maximum channel occupancy time (MCOT), and an allowed CW size, which are applied to the CAP, vary depending on channel access priority classes.

**[Table 12]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 12, a contention window size (CWS), a maximum COT value, etc. for each CAPC may be defined. For example, T_{d} may be equal to T_{f} + mₚ * Tₛₗ(T_{d} = T_{f} + mₚ * Tₛₗ).

The defer duration T_{d} is configured in the following order: duration T_{f}(16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, after selecting a random value between the minimum CW and the maximum CW mapped to the CAPC, the UE may select a backoff counter (BC) between zero and the random value. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. If the UE attempting to transmit data detects a collision, the UE may increase the CW size mapped to the CAPC, and the UE may reselect a BC between zero and the increased CW. The UE that successfully transmits a packet may initialize the CW size (to the CW min).

For example, Tₛₗ (= 9 usec) is a basic sensing unit or sensing slots, and may include a measurement duration for at least 4 usec. For example, the front 9 usec of T_{f} (= 16 usec) may be configured to be Tₛₗ. For example, mₚ may be a constant mapped per CAPC and used in T_{d} calculation. For example, a smaller value may be mapped to a lower CACP value (higher priority).

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 20 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

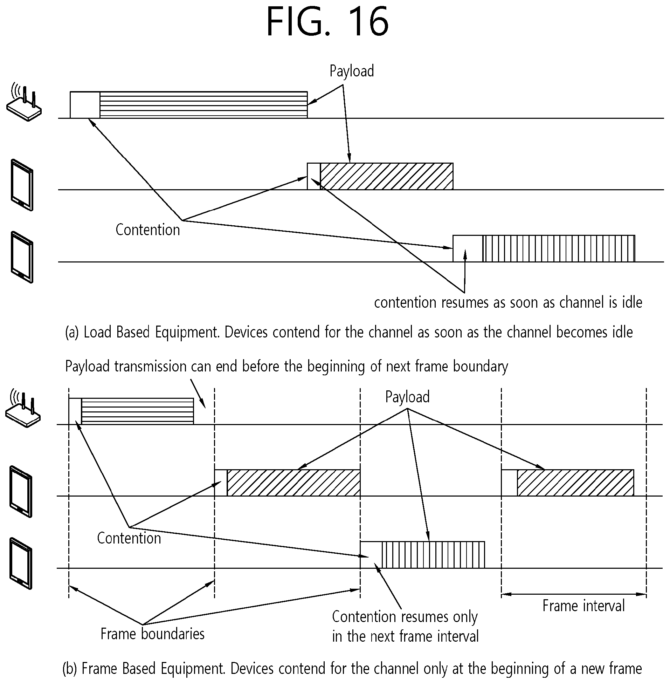

FIG. 16 shows a channel access procedure, based on an embodiment of the present disclosure. Specifically, (a) of FIG. 16 shows an example of a dynamic channel access procedure (load based equipment, LBE), and (b) of FIG. 16 shows an example of a semi-static channel access procedure (frame based equipment, FBE). The embodiment of FIG. 16 may be combined with various embodiments of the present disclosure.

Referring to (a) of FIG. 16, if a channel is idle, the UE may perform contention with other UEs on an unlicensed band to immediately occupy the channel. In addition, if the UE occupies the channel, the UE may transmit data.

Referring to (b) of FIG. 16, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins. The UE may perform type 2 series LBT operation within the FFP. For example, within the FFP, the UE may not perform random backoff-based LBT, and the UE may sense a channel for a short period of time and perform data transmission if the channel is idle.

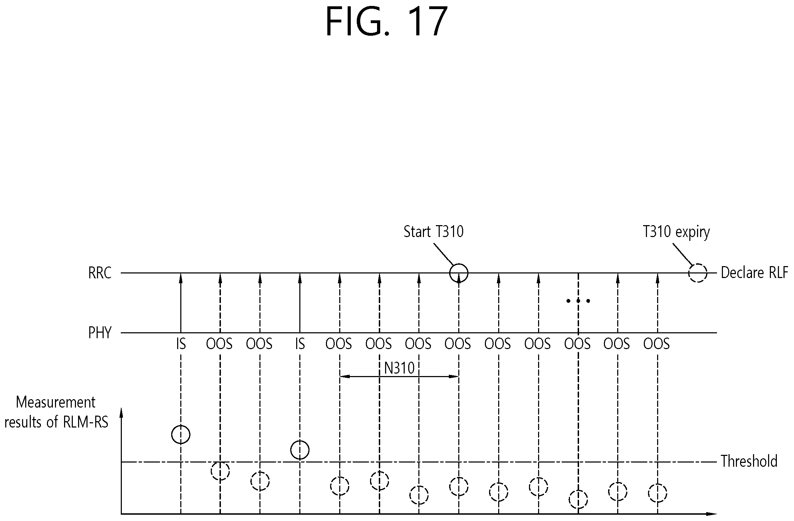

FIG. 17 shows an embodiment related to NR Uu (User-to-User) radio link failure (RLF), based on an embodiment of the present disclosure. The embodiment of FIG. 17 may be combined with various embodiments of the present disclosure.

Referring to FIG. 17, if consecutive out-of-sync (OOS) events occur at the physical layer, the UE may start a T310 timer. For example, if OOS occurs consecutively four times, the UE may start the T310 timer. If consecutive in-sync (IS) events do not occur until the expiration of the T310 timer, the UE may declare an RLF and perform an RRC re-establishment procedure.

FIG. 17 shows a T310 timer according to consecutive OOS occurrences, but the embodiment is not limited to the shown example. For example, FIG. 17 shows starting the T310 timer when OOS occurs consecutively four times, but is not limited thereto. For example, the present disclosure does not exclude numbers different from four.

For example, a transmitting UE performing sidelink communication in a sidelink unlicensed band (SL-U) may perform LBT operation to occupy a channel in an unlicensed band. For example, if LBT is successful, a UE may transmit packets on an occupied channel. For example, if LBT fails (e.g., if a UE performs sensing during a sensing slot duration and result is that a channel is busy), sidelink transmission may not be performed because a channel in an unlicensed band cannot be occupied. For example, if an SL LBT failure is detected while performing an LBT operation to occupy a channel of an unlicensed band, a MAC layer of a transmitting UE may receive an indication of an event of the SL LBT failure from a Physical layer.

A UE may be configured following parameters for SL LBT failure management by a base station and may perform an operation for recovery of an SL LBT failure or an operation for declaration of an SL LBT failure. For example, the declaration of SL LBT failure may be associated with a trigger of the SL LBT failure.
- SL LBT Failure Instance Maximum Count (sl-lbt-FailureInstanceMaxCount): If a UE detects an SL LBT failure, the UE may increment SL_LBT_COUNTER by 1 and if the UE detects the number of SL LBT failures as many as sl-lbt-FailureInstanceMaxCount until sl-lbt-FailureDetectionTimer expires, the UE may declare an SL LBT failure.
- sl-lbt-FailureDetectionTimer: A timer that is started if a SL LBT failure is detected, and UE may perform a process of recovery of an SL LBT failure while the timer is running.

For example, if a MAC layer of a transmitting UE receives an event of an SL LBT failure (e.g., a UE detects an SL LBT failure), the MAC layer of the transmitting UE may start sl-lbt-FailureDetectionTimer and may simultaneously increment SL_LBT_COUNTER by 1. For example, a process of recovery of SL LBT is performed while sl-lbt-FailureDetectionTimer is running. For example, if a UE detects SL LBT failure again while sl-lbt-FailureDetectionTimer timer is running, the UE increments SL_LBT_COUNTER by 1. For example, if SL_LBT_COUNTER incremented due to SL LBT detection does not reach threshold number (sl-lbt-FailureInstanceMaxCount) before sl-lbt-FailureDetectionTimer expires, a UE may consider SL LBT failure to have been recovered and may continue to perform normal sidelink communication by using a sidelink grant in use.

For example, if SL_LBT_COUNTER incremented due to SL LBT failure detection reaches a threshold number (sl-lbt-FailureInstanceMaxCount) before sl-lbt-FailureDetectionTimer expires, a UE may declare consistent SL LBT failure. For example, the declaration of continuous SL LBT failure may be related to a trigger for continuous SL LBT failure. For exmaple, in unicast communication, when continuous LBT failure occurs on a unicast link for sidelink data transmission, the UE may declare SL RLF for that unicast link.

For example, in SL-U, a UE may first need to occupy a sidelink unlicensed band channel to perform SL data transmission. To occupy a sidelink unlicensed band channel, the UE may perform an LBT (for example, Type 1 LBT: random backoff-based LBT) to find an unlicensed band channel not occupied by neighboring sidelink UEs. If the UE performing LBT discovers a channel unoccupied by other UEs, the UE may occupy that channel and perform SL data transmission. When sidelink data to be transmitted occurs (for example, when SL data is available in the SL logical channel), the UE may accommodate the data in the generated sidelink grant and transmit the sidelink data to the destination UE. If sidelink data to be transmitted occurs (for example, using an allocated sidelink grant), and the UE has performed an LBT process to find an unoccupied unlicensed band channel for sidelink data transmission, but the LBT process fails as many times as the failure threshold (for example, consistent SL LBT failure), the UE may perform the following recovery operation without declaring sidelink RLF.

If a UE experiences continuous sidelink LBT failure in the RB set or resource pool currently in use on the sidelink unlicensed band, the UE may declare continuous SL LBT failure on that RB set or resource pool and switch to another RB set or resource pool to perform the LBT operation again. For example, if the UE switches to another resource pool or RB set to retry the LBT operation and continuous LBT failure does not occur, the UE may not declare SL RLF. For example, if continuous sidelink LBT failure occurs in multiple (for example, threshold N) or all resource pools or in multiple (for example, threshold N) or all RB sets on the sidelink unlicensed band, the UE may declare SL RLF and release the sidelink session (for example, a PC5 unicast link or PC5 RRC connection) or sidelink bandwidth part (BWP).

The UE may perform counting of the LBT count for declaring continuous SL LBT failure as follows.

When the MAC entity of the UE is notified by the physical layer of an SL LBT failure per resource pool, per RB set, or per SL BWP, the UE may increment the SL_LBT_COUNTER by "1". When the SL_LBT_COUNTER reaches sl-lbt-FailureInstanceMaxCount, the UE may declare continuous SL LBT failure for the corresponding resource pool, RB set, or SL BWP.

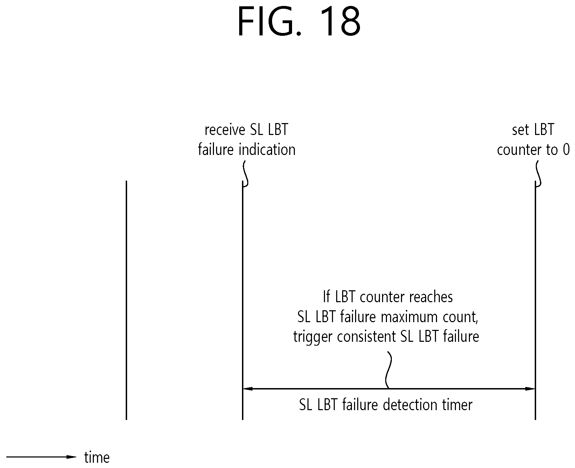

FIG. 18 shows an SL LBT failure detection and recovery procedure, based on an embodiment of the present disclosure. The embodiment of FIG. 18 may be combined with various embodiments of the present disclosure.

Referring to FIG. 18, a MAC entity of a UE may receive information related to SL LBT failure. A MAC entity of a UE may receive information related to SL LBT failure from a lower layer (e.g., physical layer). A lower layer of a UE may perform an LBT procedure. An LBT procedure may be an SL LBT procedure. A lower layer of a UE may perform an LBT procedure, and if a channel is identified as being occupied, a transmission may not be performed by the lower layer of the UE. When a lower layer of a UE performs an SL LBT procedure before a transmission and the transmission is not performed, an SL LBT failure indication may be sent to a MAC entity of the UE from the lower layer of the UE. If information related to an SL LBT failure has been received from a lower layer of a UE, a MAC entity of the UE may start an SL LBT failure detection timer. If information related to an SL LBT failure has been received from a lower layer of a UE, a MAC entity of the UE may increment LBT counter. LBT counter is a counter related to information related to SL LBT failure, which may be initially set to 0.

If LBT counter reaches SL LBT failure maximum count, consistent SL LBT failure may be triggered. That LBT failure counter reaches SL LBT failure maximum count may refer to that the LBT failure counter is larger than or equal to the SL LBT failure maximum count. For example, SL LBT failure may be triggered for an RB set. For example, SL LBT failure may be triggered for a resource pool. For example, based on triggered SL LBT failure, an SL grant associated with an RB set where the SL LBT failure occurred may be released. For example, based on triggered SL LBT failure, information related to consistent SL LBT failure may be transmitted to a base station. For example, based on triggered SL LBT failure, an SL grant may be generated in an RB set different from an RB set where the SL LBT failure occurred. For example, based on an SL grant generated from another RB set, SL transmission that could not be completed due to an SL LBT failure may be continued. For example, switching of an RB set may be controlled by a MAC entity based on its own detection of consistent LBT failure.

If SL LBT failure detection timer expires, LBT counter may be set to 0. If information related to an SL LBT failure has been received from a lower layer of a UE, a MAC entity of the UE may restart SL LBT failure detection timer. If information related to an SL LBT failure has been received from a lower layer of a UE, a MAC entity of the UE may increment LBT counter.

If a physical layer of a UE detects an SL LBT failure, the physical layer of the UE may report an SL LBT failure to the MAC layer. For example, if the physical layer of the UE reports an SL LBT failure to the MAC layer, it may transfer the following assistance information together.
- RB set index: RB set index where SL LBT failure occurred, for example, RB set index where LBT failure occurred for sidelink-synchronization signal block (S-SSB). For example, LBT failure may be SL LBT failure.
- Resource pool index: Resource pool index where SL LBT failure occurred, for example, resource pool index where LBT failure occurred for S-SSB. For example, LBT failure may be SL LBT failure.
- Carrier index: Carrier index where SL LBT failure occurred,
- SL BWP: SL BWP index where SL LBT failure occurred,
- Recommended RB set index or recommended resource pool index: RB set index to which a MAC layer should switch or sidelink resource pool index to which the MAC layer should switch
- One shot SL LBT failure cause
- Consistent SL LBT failure or Channel access type used to declare SL LBT failure (e.g., Type 1 SL LBT or Type 2 SL LBT)
- PC5 link identifier: PC5 unicast link information where SL LBT failure occurred
- A pair of a source layer-1 ID and a destination layer-1 ID or a groupcast/broadcast destination layer-1 ID: information related to source/destination where SL LBT failure occurred
- A pair of a source layer-2 ID and a destination layer-2 ID or a groupcast/broadcast destination layer-2 ID: information related to a source/destination where the SL LBT failure occurred
- A groupcast/broadcast destination layer-1 ID or a groupcast/broadcast destination layer-2 ID: information related to a groupcast/broadcast destination ID where the SL LBT failure occurred
- Information related to a time when the SL LBT failure occurred

A MAC layer of a UE may perform the following consistent LBT failure operations based on the auxiliary information received from the physical layer:
A MAC layer of a UE may receive an SL LBT failure indication from a physical layer, along with an RB set index or resource pool index where SL LBT failure occurred, and source layer-2 ID and destination layer-2 ID (or source layer-1 ID and destination layer-1 ID) information. A MAC layer may increment an LBT count by 1 per RB set or resource pool of a source layer-2 ID and destination layer-2 ID (or source layer-1 ID and destination layer-1 ID) based on an SL LBT failure indication received from a physical layer, an RB set index or resource pool index where the SL LBT failure indication occurred, and source layer-2 ID and destination layer-2 ID (or source layer-1 ID and destination layer-1 ID) information. If a MAC layer receives a report for an LBT failure in an RB set (an RB set index reported by a physical layer) or resource pool (a resource pool index reported by the physical layer) of a source layer-2 ID and a destination layer-2 ID (or a source layer-1 ID and a destination layer-1 ID) as many times as the threshold, the MAC layer may declare a consistent LBT failure in the corresponding RB set or resource pool and perform LBT operation and unlicensed band operation by switching to another RB set or another resource pool. For example, a MAC layer may perform LBT operation and unlicensed band operation by switching to a recommended RB set or resource pool reported by a physical layer. A MAC layer of a UE may declare a sidelink radio link failure for a unicast link if the MAC layer of the UE declares a consistent LBT failure in all (or threshold N) RB sets or all (or threshold N) resource pools of the sidelink BWP. A MAC layer may determine in which RB set/which resource pool/which source layer-2 ID and destination layer-2 ID (or source layer-1 ID and destination layer-1 ID) pair an SL LBT failure occurred based on the auxiliary information (RB set index where SL LBT failure occurred, resource pool index where SL LBT failure occurred, source layer-2 ID and destination layer-2 ID (or source layer-1 ID and destination layer-1 ID) received from a physical layer where the SL LBT failure occurred. If consistent LBT failure occurs in all RB sets or all resource pools or a threshold number of RB sets or a threshold number of resource pools, in which pair of source layer-2 ID and destination layer-2 ID (or source layer-1 ID and destination layer-1 ID) the SL RLF should be declared may be determined.

The present disclosure is described with reference to, but not limited to, unicast (source layer-2 ID and destination layer-2 ID (or source layer-1 ID and destination layer-1 ID)). The present disclosure may be equally extended to groupcast/broadcast (destination layer-2 ID (or destination layer-1 ID)). If a UE declares all or a threshold N continuous LBT failures in groupcast/broadcast, instead of declaring an SL RLF, a UE may release corresponding groupcast/broadcast session (e.g., SL DRB: Sidelink Data Radio Bearer) and terminate the groupcast/broadcast communication.

According to the present disclosure, for example, if a MAC layer of a UE only reports an SL LBT failure indication from a physical layer excluding the proposed auxiliary information, the MAC layer of the UE may determine the SL LBT failure indication received from the physical layer as an SL-LBT failure for SL-SSB (or S-SSB) transmission. For example, in the case of an SL LBT failure indication for SL-SSB (or S-SSB), a physical layer of the UE may only report the SL LBT failure indication to a MAC layer.

According to the present disclosure, for example, based on a pre-configured timer length (e.g., configured by a base station to a UE through an RRC message or configured by a UE to a peer UE via a PC5 RRC message or pre-configuration), if an LBT failure (e.g., one-shot LBT failure or consistent LBT failure) occurs, a UE may start a timer and may not perform S-SSB (or S-SSB) or PSFCH transmission using resources of the RB set (or resource pool) where the LBT failure occurred until the timer expires. For example, a UE may perform SL-SSB (or S-SSB) or PSFCH transmission using resources of the RB set (or resource pool) where LBT failure occurred after a timer expires.

According to the present disclosure, for example, a congestion level threshold of an RB set (or resource pool) for SL-SSB (or S-SSB) or PSFCH transmission may be defined, and transmission of these messages may be performed if a congestion level measurement value of an RB set (or resource pool) is less than (or larger than) the congestion level threshold of the RB set (or resource pool), regardless of whether an LBT failure (e.g., one-shot LBT failure or consistent LBT failure) occurs in the RB set (or resource pool). For example, if a congestion level measurement (e.g., RSRP, RSRQ, SINR) value of an RB set (or resource pool) is less than (or larger than) a congestion level threshold of an RB set (or resource pool), a UE may perform SL-SSB (or S-SSB) or PSFCH transmission using resources of the corresponding RB set (or resource pool).

According to the present disclosure, for example, a congestion level threshold of an RB set (or resource pool) for SL-SSB (or S-SSB) or PSFCH transmission may be defined, and transmission of these messages may be performed if a congestion level measurement value of an RB set (or resource pool) is less than the congestion level threshold of the RB set (or resource pool). For example, if a congestion level measurement value (e.g., the number of SL SBT failure) of an RB set (or resource pool) is less than a congestion level threshold of an RB set (or resource pool), a UE may perform SL-SSB (or S-SSB) or PSFCH transmission using resources of the corresponding RB set (or resource pool).

For example, a procedure for HARQ-based Sidelink RLF detection may be as follows:
The HARQ-based Sidelink RLF detection procedure may be used to detect Sidelink RLF based on a number of consecutive DTX on PSFCH reception occasions for a PC5-RRC connection.

RRC may configure the following parameter to control HARQ-based Sidelink RLF detection. For example, the following parameter may be configured by a base station. For example, the following parameter may be pre-configured: sl-maxNumConsecutiveDTX:
The following UE variable may be used for HARQ-based Sidelink RLF detection: numConsecutiveDTX, which is maintained for each PC5-RRC connection.

The Sidelink HARQ Entity may need to (re-)initialize numConsecutiveDTX to zero for each PC5-RRC connection which has been established by upper layers, if any, upon establishment of the PC5-RRC connection or (re)configuration of sl-maxNumConsecutiveDTX.

The Sidelink HARQ Entity shall for each PSFCH reception occasion associated to the PSSCH transmission:
1> if PSFCH reception is absent on the PSFCH reception occasion:
   2> increment numConsecutiveDTX by 1;
   2> if numConsecutiveDTX reaches sl-maxNumConsecutiveDTX:
      3> indicate HARQ-based Sidelink RLF detection to RRC.
         else:
         re-initialize numConsecutiveDTX to zero.
         For example, RRC of sidelink UE shall perform Sidelink radio link failure related actions as follows.

The UE shall:
1> upon indication from sidelink RLC entity that the maximum number of retransmissions for a specific destination has been reached; or
   2> consider sidelink radio link failure to be detected for this destination;
   2> release the DRBs of this destination (e.g., release the DRBs of this destination, according to clause 5.8.9.1a.1);
   2> release the SRBs of this destination (e.g., release the SRBs of this destination, according to clause 5.8.9.1a.3);
   2> release the PC5 Relay RLC channels of this destination if configured (e.g., release the PC5 Relay RLC channels of this destination if configured, in according to clause 5.8.9.7.1);
   2> discard the NR sidelink communication related configuration of this destination;
   2> reset the sidelink specific MAC of this destination;
   2> consider the PC5-RRC connection is released for the destination;
   2> indicate the release of the PC5-RRC connection to the upper layers for this destination (e.g.. PC5 is unavailable);
   2> if UE is in RRC_CONNECTED:
      3> if the UE is acting as L2 U2N Remote UE for the destination:
         4> initiate the RRC connection re-establishment procedure (e.g., initiate the RRC connection re-establishment procedure as specified in 5.3.7).
      3> else:
         4> perform the sidelink UE information for NR sidelink communication procedure (e.g., perform the sidelink UE information for NR sidelink communication procedure, as specified in 5.8.3.3);

- It may be up to UE implementation on whether and how to indicate to upper layers to maintain the keep-alive procedure.

In the present disclosure, even if a UE declares continuous SL LBT failure in a specific sidelink resource pool or specific RB set and switches to another new sidelink resource pool or another new RB set, the UE may not reset the DTX number incremented for a "DTX-based SL RLF declaration operation," but instead continuously accumulate the DTX number to perform the "DTX-based SL RLF declaration operation." For example, the DTX may be related to SL DTX. For example, a DTX declaration may be related to DTX detection. Within an SL BWP, even if continuous SL LBT failures occur in specific sidelink resource pools or specific RB sets and the UE continues switching operations to other sidelink resource pools or other RB sets, the UE may not reset the DTX number for the same unicast link (e.g., pair of Source Layer-2 ID and Destination Layer-2 ID). If the UE fails to receive a PSFCH (e.g., ACK feedback or NACK feedback) corresponding to a PSCCH/PSSCH transmission performed in another SL resource or RB set, the UE may continue to accumulate the DTX number (e.g., when the transmitting UE transmits PSCCH/PSSCH to a receiving UE and does not receive HARQ feedback (ACK feedback or NACK feedback) for the transmitted PSCCH/PSSCH, the UE may increment the DTX number by one) and perform the "DTX-based SL RLF declaration operation." For example, when the UE performs PSCCH/PSSCH transmission in an RB set or sidelink resource pool within the SL BWP, the UE may increment the DTX number by one not only due to DTX but also when SL LBT failure occurs for PSCCH/PSSCH transmission, PSFCH transmission, or SL-SSB (or S-SSB) transmission. When the DTX number reaches a threshold, the UE may declare SL RLF, release the corresponding unicast link, and report the SL RLF to the base station. When reporting the SL RLF to the base station, the UE may also report the number of SL LBT failures that occurred for the SL RLF declaration (e.g., per pair of Source Layer-2 ID and Destination Layer-2 ID). When the UE declares SL RLF as the DTX number reaches the threshold, the UE may reset the DTX number (set to zero value). When the UE declares continuous SL LBT failure, the UE may reset the DRX number.

For example, when continuous SL LBT failures occur in a specific sidelink resource pool or RB set within an SL BWP, and the UE switches to another sidelink resource pool or RB set, the UE may reset the DTX number per sidelink resource pool or RB set, thereby newly performing DTX counting. The DTX number may be managed per sidelink resource pool or RB set, and the DTX counting may also be performed per sidelink resource pool or RB set.

Note) "DTX-based SL RLF declaration operation": The transmitting UE transmits PSCCH/PSSCH to a receiving UE, and if it does not receive HARQ feedback (e.g., ACK or NACK) for the transmitted PSCCH/PSSCH, the UE may increment the DTX number by one. When the DTX number reaches a threshold, the UE may declare SL RLF for the corresponding unicast link and release the corresponding unicast link. For example, the DTX may be related to SL DTX. For example, a DTX declaration may be related to DTX detection.

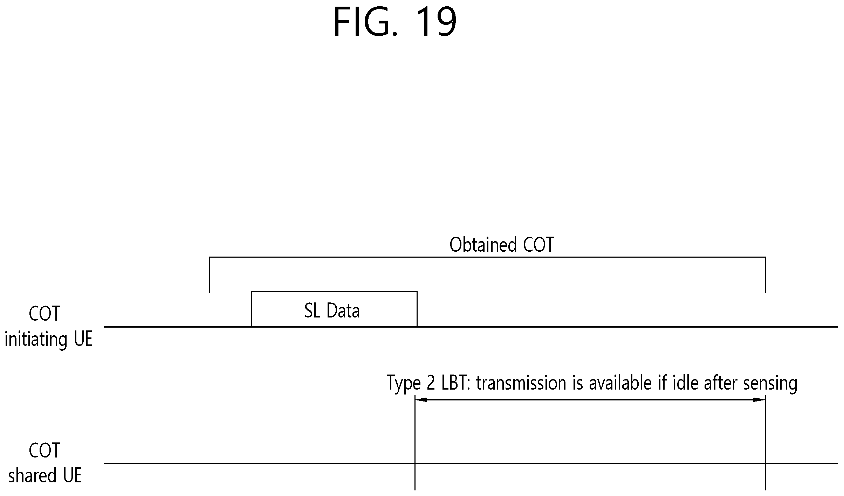

FIG. 19 shows an embodiment related to a transmission operation of a UE within a shared COT, based on an embodiment of the present disclosure. The embodiment of FIG. 19 may be combined with various embodiments of the present disclosure.

Referring to FIG. 19, a UE generating a COT (for example, a shared COT) (e.g., a COT initiating UE) may share the COT it has acquired with another UE. A UE that has initiated/obtained a COT (for example, a shared COT) may transmit the acquired (shared) COT to another UE via SCI, MAC CE, or a PC5-RRC message. When delivering an acquired (shared) COT via SCI, the UE may transmit the acquired (shared) COT to the destination UE for a unicast link (e.g., a pair of L1 source ID and L1 destination ID), and may transmit the acquired (shared) COT to a groupcast/broadcast destination UE (groupcast/broadcast L1 destination ID). When the UE delivers an acquired (shared) COT via MAC CE (for example, SL COT Information MAC CE), the UE may transmit the acquired (shared) COT to the destination UE for a unicast link (e.g., a pair of L1/L2 source ID and L1/L2 destination ID), and may transmit the acquired (shared) COT to a groupcast/broadcast destination UE (groupcast/broadcast L1/L2 destination ID). A UE receiving the (shared) COT from a UE that initiated the (shared) COT (e.g., a COT responding UE) may perform Type 2 LBT (For example, Type 2A or Type 2B LBT: If a sensing operation confirms the channel is idle for a predetermined time, the UE may transmit its SL data within the shared COT. For example, Type 2C LBT: The UE may directly transmit SL data without sensing.) operation after the transmission by the UE that initiated the (shared) COT is completed within the shared COT. Shared COT information transmitted from the COT initiating UE to the COT responding UE may include a shared COT duration, a shared COT starting offset, and information related to the SL-CAPC value used by the COT responding UE.

FIG. 19 shows an embodiment in which a UE receives a shared COT from a peer UE, but the UE may also be configured by a base station with the shared COT to use. The transmitting UE for transmitting sidelink data may directly initiate a COT to use, perform Type-2 LBT within this COT, and transmit the sidelink data within the initiated COT.

For example, in SL-U, a UE may first need to occupy a sidelink unlicensed band channel to transmit sidelink data. To occupy a sidelink unlicensed band channel, the UE may perform LBT (for example, Type 1 LBT: Random Backoff-based LBT) to find an unlicensed channel that is not occupied by other UEs. If the UE performing LBT finds a channel not occupied by other UEs, it may occupy the channel to perform sidelink data transmission. If the LBT procedure fails, the UE may adjust the parameters used for LBT (for example, adjusting the contention window size), repeat the LBT procedure, and continue attempting to find an unoccupied channel in the unlicensed band.

For example, the transmitting UE does not know whether the PSFCH reception is absent due to a PSCCH/PSSCH decoding failure or due to a sidelink (SL) LBT failure for PSFCH. For example, in the sidelink unlicensed band, if the transmitting UE successfully performs SL LBT for PSCCH/PSSCH transmission, the UE may transmit the PSCCH/PSSCH to the receiving UE.For example, if the receiving UE successfully receives PSCCH/PSSCH from the transmitting UE, it may perform LBT for PSFCH transmission, and upon successful LBT, may transmit the PSFCH. For example, the PSFCH transmission may be related to ACK feedback. For example, the PSFCH transmission may be related to NACK feedback. For example, the LBT may be Type 1 LBT. For example, the LBT may be Type 2 LBT. For example, if the transmitting UE does not receive PSFCH from the receiving UE, it may be unable to determine whether the receiving UE did not transmit the PSFCH due to missing PSCCH/PSSCH reception or because LBT for PSFCH transmission failed despite successful PSCCH/PSSCH decoding. For example, missing PSCCH/PSSCH reception may indicate an SCI decoding failure of PSCCH/PSSCH at the receiving UE. The present disclosure proposes a method allowing the transmitting UE to distinguish whether the reason the receiving UE did not transmit PSFCH was due to missing PSCCH/PSSCH reception, or due to a failed LBT for PSFCH transmission despite successful PSCCH/PSSCH decoding. For example, missing PSCCH/PSSCH reception may indicate an SCI decoding failure of PSCCH/PSSCH at the receiving UE.

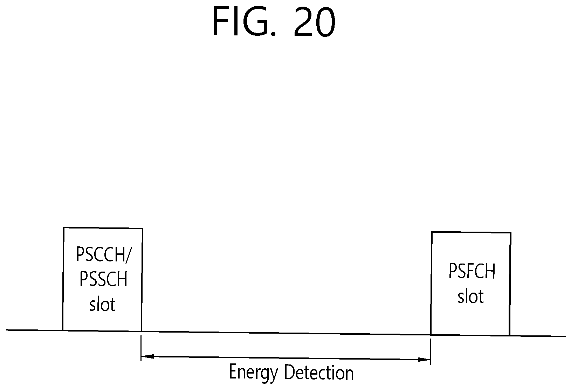

FIG. 20 shows an embodiment related to energy detection operations for distinguishing PSFCH reception failures at a transmitting UE, based on an embodiment of the present disclosure. The embodiment of FIG. 20 may be combined with various embodiments of the present disclosure.

Referring to FIG. 20, if the transmitting UE does not receive PSFCH from the receiving UE despite detecting an energy level equal to or above a threshold through energy detection performed during the GAP between PSCCH/PSSCH transmission slots and PSFCH slots, the transmitting UE may determine that the receiving UE did not transmit the PSFCH due to sidelink (SL) LBT failure for PSFCH transmission, and therefore may not increment the number of DTXs. For example, the GAP interval may be the interval during which the transmitting UE performs energy detection to distinguish whether the receiving UE did not transmit PSFCH due to missing PSCCH/PSSCH reception, or due to successful PSCCH/PSSCH decoding followed by an LBT failure for PSFCH transmission. For example, the GAP interval may be configured by the base station for the UE. For example, the GAP interval may be pre-configured. For example, missing PSCCH/PSSCH reception may be an SCI decoding failure of PSCCH/PSSCH at the receiving UE. For example, the energy level threshold may be the energy level threshold that the transmitting UE uses as a comparison when performing energy detection to distinguish whether the receiving UE did not transmit PSFCH due to missing PSCCH/PSSCH reception, or due to successful PSCCH/PSSCH decoding followed by an LBT failure for PSFCH transmission. If the energy level detected during the GAP interval between the PSCCH/PSSCH transmission slots and the PSFCH slots is equal to or below the threshold and the transmitting UE does not receive the PSFCH corresponding to the PSCCH/PSSCH transmission from the receiving UE, the transmitting UE may determine that the receiving UE did not transmit the PSFCH due to missing or decoding failure of PSCCH/PSSCH reception, and may increment the number of DTXs by "1". For example, the energy level threshold may be configured by the base station for the UE. For example, the energy level threshold may be pre-configured. For example, the energy level threshold may be the threshold used by the transmitting UE during energy detection to distinguish whether the receiving UE did not transmit PSFCH due to missing PSCCH/PSSCH reception, or due to successful PSCCH/PSSCH decoding followed by an LBT failure for PSFCH transmission.

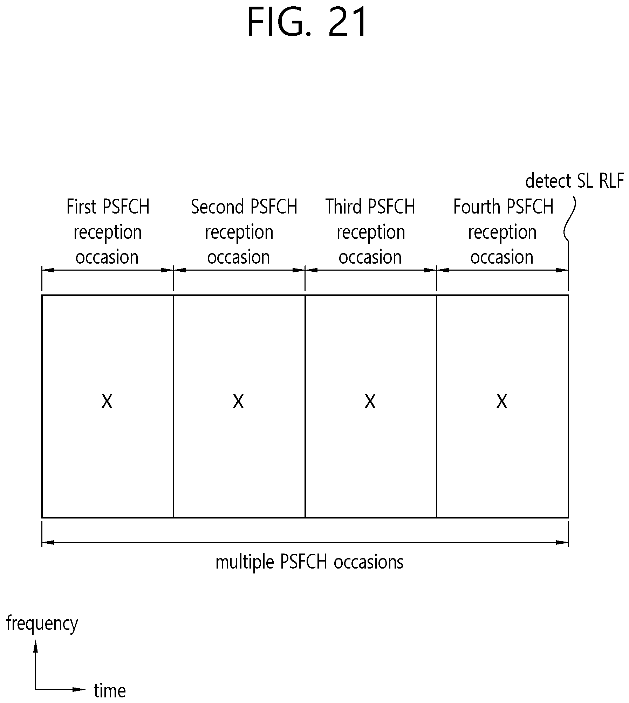

FIG. 21 shows an embodiment for detecting SL RLF, based on an embodiment of the present disclosure. The embodiment of FIG. 21 may be combined with various embodiments of the present disclosure.

Referring to FIG. 21, a UE may perform the following operations for a PSFCH reception occasion. For example, a MAC entity of the UE may perform the following operations for a PSFCH reception occasion. For example, a MAC entity associated with a sidelink HARQ entity of the UE may perform the following operations for a PSFCH reception occasion:
- If PSFCH reception is absent at a PSFCH reception occasion, the number of DTXs may be incremented by 1. For example, if PSFCH reception is absent at the first PSFCH reception occasion, the number of DTXs may be incremented by 1. If PSFCH reception is absent at the second PSFCH reception occasion, the number of DTXs may be incremented by 1. If PSFCH reception is absent at the third PSFCH reception occasion, the number of DTXs may be incremented by 1. If PSFCH reception is absent at the fourth PSFCH reception occasion, the number of DTXs may be incremented by 1.
- For example, if energy detection during the GAP interval between a PSCCH/PSSCH transmission slot and a PSFCH slot indicates that the energy level is above a threshold, but PSFCH for the PSCCH/PSSCH transmission is not received from the receiving UE, the transmitting UE may determine that the receiving UE does not transmit the PSFCH due to SL LBT failure for PSFCH transmission, and thus may not increment the number of DTXs. For example, the GAP interval may be an interval during which the transmitting UE performs energy detection to determine whether the receiving UE does not transmit PSFCH due to missing PSCCH/PSSCH or due to successful decoding of PSCCH/PSSCH but SL LBT failure for PSFCH transmission. For example, the GAP interval may be configured by the base station for the UE. For example, the GAP interval may be pre-configured. For example, missing PSCCH/PSSCH may correspond to a decoding failure of SCI for PSCCH/PSSCH by the receiving UE. For example, the energy level threshold may be a threshold used by the transmitting UE during energy detection to determine whether the receiving UE does not transmit PSFCH due to missing PSCCH/PSSCH or due to successful decoding of PSCCH/PSSCH but SL LBT failure for PSFCH transmission.
- For example, if energy detection during the GAP interval between a PSCCH/PSSCH transmission slot and a PSFCH slot indicates that the energy level is below a threshold and PSFCH for PSCCH/PSSCH transmission is not received from the receiving UE, the transmitting UE may determine that the receiving UE did not receive or failed to decode PSCCH/PSSCH, and thus may increment the number of DTXs by "1". For example, the GAP interval may be an interval during which the transmitting UE performs energy detection to determine whether the receiving UE does not transmit PSFCH due to missing PSCCH/PSSCH or due to successful decoding of PSCCH/PSSCH but SL LBT failure for PSFCH transmission. For example, the GAP interval may be configured by the base station for the UE. For example, the GAP interval may be pre-configured. For example, missing PSCCH/PSSCH may correspond to a decoding failure of SCI for PSCCH/PSSCH by the receiving UE. For example, the energy level threshold may be a threshold used by the transmitting UE during energy detection to determine whether the receiving UE does not transmit PSFCH due to missing PSCCH/PSSCH or due to successful decoding of PSCCH/PSSCH but SL LBT failure for PSFCH transmission.
- If the number of DTXs reaches the maximum number of DTXs for detecting SL RLF, the SL RLF may be detected. For example, the maximum number of DTXs for detecting SL RLF may be configured by the RRC. For example, the maximum number of DTXs for detecting SL RLF may be configured by the base station. For example, the maximum number of DTXs for detecting SL RLF may be preconfigured. For example, according to FIG. 21, the maximum number of DTXs for detecting SL RLF may be configured as 4.

For example, UE may perform Sidelink radio link failure related actions as follows. For example, RRC layer of UE may perform Sidelink radio link failure related actions as follows. For example, upon indication from sidelink RLC entity that the maximum number of retransmissions for a specific destination has been reached:
- UE may consider sidelink radio link failure to be detected for this destination;
- UE may release the DRBs of this destination (e.g., release the DRBs of this destination, according to clause 5.8.9.1a.1),
- UE may release the SRBs of this destination (e.g., release the SRBs of this destination, according to clause 5.8.9.1a.3),
- UE may release the PC5 Relay RLC channels of this destination if configured (e.g., release the PC5 Relay RLC channels of this destination if configured, in according to clause 58971);
- UE may discard the NR sidelink communication related configuration of this destination;
- UE may reset the sidelink specific MAC of this destination;
- UE may consider the PC5-RRC connection is released for the destination;
- UE may indicate the release of the PC5-RRC connection to the upper layers for this destination (e.g.. PC5 is unavailable),
- if UE is in RRC_CONNECTED, and if the UE is acting as L2 U2N Remote UE for the destination, UE may initiate the RRC connection re-establishment procedure (e.g., initiate the RRC connection re-establishment procedure as specified in 5.3.7).
- if UE is in RRC_CONNECTED, and if the UE is not acting as L2 U2N Remote UE for the destination, UE may perform the sidelink UE information for NR sidelink communication procedure (e.g., UE may perform the sidelink UE information for NR sidelink communication procedure, as specified in 5.8.3.3),
- It may be up to UE implementation on whether and how to indicate to upper layers to maintain the keep-alive procedure.

Although FIG. 21 shows first through fourth PSFCH reception occasions, it is not limited thereto. Although FIG. 21 shows the maximum number of DTXs for detecting SL RLF as 4, it is not limited thereto.

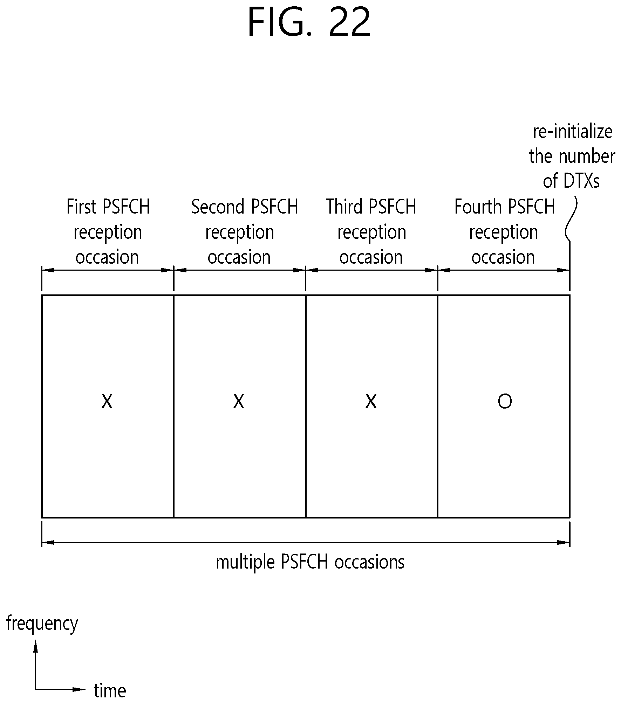

FIG. 22 shows an embodiment of re-initializing the number of DTXs, based on an embodiment of the present disclosure. The embodiment of FIG. 22 may be combined with various embodiments of the present disclosure.

Referring to FIG. 22, a UE may perform the following operations for a PSFCH reception occasion. For example, a MAC entity of the UE may perform the following operations for a PSFCH reception occasion. For example, a MAC entity associated with a sidelink HARQ entity of the UE may perform the following operations for a PSFCH reception occasion:
- If PSFCH reception is absent at a PSFCH reception occasion, the number of DTXs may be incremented by 1. For example, if PSFCH reception is absent at the first PSFCH reception occasion, the number of DTXs may be incremented by 1. If PSFCH reception is absent at the second PSFCH reception occasion, the number of DTXs may be incremented by 1. If PSFCH reception is absent at the third PSFCH reception occasion, the number of DTXs may be incremented by 1.
- For example, if energy detection during the GAP interval between a PSCCH/PSSCH transmission slot and a PSFCH slot indicates that the energy level is above a threshold, but PSFCH for the PSCCH/PSSCH transmission is not received from the receiving UE, the transmitting UE may determine that the receiving UE does not transmit the PSFCH due to SL LBT failure for PSFCH transmission, and thus may not increment the number of DTXs. For example, the GAP interval may be an interval during which the transmitting UE performs energy detection to determine whether the receiving UE does not transmit PSFCH due to missing PSCCH/PSSCH or due to successful decoding of PSCCH/PSSCH but SL LBT failure for PSFCH transmission. For example, the GAP interval may be configured by the base station for the UE. For example, the GAP interval may be pre-configured. For example, missing PSCCH/PSSCH may correspond to a decoding failure of SCI for PSCCH/PSSCH by the receiving UE. For example, the energy level threshold may be a threshold used by the transmitting UE during energy detection to determine whether the receiving UE does not transmit PSFCH due to missing PSCCH/PSSCH or due to successful decoding of PSCCH/PSSCH but SL LBT failure for PSFCH transmission.
- For example, if energy detection during the GAP interval between a PSCCH/PSSCH transmission slot and a PSFCH slot indicates that the energy level is below a threshold and PSFCH for PSCCH/PSSCH transmission is not received from the receiving UE, the transmitting UE may determine that the receiving UE did not receive or failed to decode PSCCH/PSSCH, and thus may increment the number of DTXs by "1". For example, the GAP interval may be an interval during which the transmitting UE performs energy detection to determine whether the receiving UE does not transmit PSFCH due to missing PSCCH/PSSCH or due to successful decoding of PSCCH/PSSCH but SL LBT failure for PSFCH transmission. For example, the GAP interval may be configured by the base station for the UE. For example, the GAP interval may be pre-configured. For example, missing PSCCH/PSSCH may correspond to a decoding failure of SCI for PSCCH/PSSCH by the receiving UE. For example, the energy level threshold may be a threshold used by the transmitting UE during energy detection to determine whether the receiving UE does not transmit PSFCH due to missing PSCCH/PSSCH or due to successful decoding of PSCCH/PSSCH but SL LBT failure for PSFCH transmission.
- If the number of DTXs reaches the maximum number of DTXs for detecting SL RLF, the SL RLF may be detected. For example, the maximum number of DTXs for detecting SL RLF may be configured by the RRC. For example, the maximum number of DTXs for detecting SL RLF may be configured by the base station. For example, the maximum number of DTXs for detecting SL RLF may be preconfigured. For example, according to FIG. 22, the maximum number of DTXs for detecting SL RLF may be configured as 4.
- If PSFCH reception is present in a PSFCH reception occasion, the number of DTXs may be re-initialized. For example, if PSFCH reception is present in a PSFCH reception occasion, the number of DTXs may be re-initialized to 0.

Although FIG. 22 shows first through fourth PSFCH reception occasions, it is not limited thereto. Although FIG. 22 shows an example in which PSFCH reception occurs at the fourth PSFCH reception occasion, it is not limited thereto.

The GAP interval between PSCCH/PSSCH transmission slots and PSFCH slots, as well as the energy level threshold, may be differently configured according to Type 1 LBT-based channel access and Type 2 LBT-based channel access. For example, the GAP interval may be an interval during which the transmitting UE performs energy detection to distinguish whether the receiving UE did not transmit PSFCH due to missing PSCCH/PSSCH or due to successful decoding of PSCCH/PSSCH but subsequent LBT failure for PSFCH transmission. For example, the GAP interval may be configured by the base station to the UE. For example, the GAP interval may be pre-configured. For example, missing PSCCH/PSSCH may be due to SCI decoding failure at the receiving UE that receives PSCCH/PSSCH. For example, the energy level threshold may be used by the transmitting UE when performing energy detection to distinguish whether the receiving UE did not transmit PSFCH due to missing PSCCH/PSSCH or due to successful decoding of PSCCH/PSSCH but subsequent LBT failure for PSFCH transmission. The GAP interval between PSCCH/PSSCH transmission slots and PSFCH slots, and the energy level threshold, may be differently configured per sidelink resource pool, per RB set, per SL-CAPC value, per CBR, or per congestion level. For example, the GAP interval may be an interval during which the transmitting UE performs energy detection to distinguish whether the receiving UE did not transmit PSFCH due to missing PSCCH/PSSCH or due to successful decoding of PSCCH/PSSCH but subsequent LBT failure for PSFCH transmission. For example, the GAP interval may be configured by the base station to the UE. For example, the GAP interval may be pre-configured. For example, missing PSCCH/PSSCH may be due to SCI decoding failure at the receiving UE that receives PSCCH/PSSCH. For example, the energy level threshold may be used by the transmitting UE when performing energy detection to distinguish whether the receiving UE did not transmit PSFCH due to missing PSCCH/PSSCH or due to successful decoding of PSCCH/PSSCH but subsequent LBT failure for PSFCH transmission. For example, a higher energy level threshold may be configured as the CBR increments. For example, a lower energy level threshold may be configured as the CBR increases. For example, a higher energy level threshold may be configured as the number of LBT occurrences increments. For example, a higher energy level threshold may be configured as the probability of LBT occurrence increments. For example, the CBR may correspond to a congestion level. For example, the UE may apply a higher energy level threshold as the number of LBT occurrences increments. For example, the GAP interval may be configured by the base station to the UE. For example, the GAP interval may be pre-configured. For example, the energy level threshold may be configured by the base station to the UE. For example, the energy level threshold may be pre-configured.

For example, the present disclosure proposes the following operation.

A receiving UE may receive shared COT information from another UE. The receiving UE that received the shared COT may perform Type 2 LBT within the shared COT interval to transmit a PSFCH. For example, the other UE may be a UE that did not transmit the PSCCH/PSSCH associated with the PSFCH to be transmitted. For example, the transmitting UE may not distinguish whether the receiving UE performed Type 1 LBT or Type 2 LBT to transmit the PSFCH, and if the transmitting UE did not deliver the shared COT, it may assume that the receiving UE performs Type 1 LBT for PSFCH transmission. For example, if the transmitting UE did not deliver the shared COT, the assumption by the transmitting UE that the receiving UE performs Type 1 LBT for PSFCH transmission may be incorrect. For example, the transmitting UE may be the UE that transmitted the PSCCH/PSSCH associated with the PSFCH to be transmitted. The transmitting UE may not accurately determine the sensing interval or LBT interval for distinguishing PSFCH reception. For example, the LBT interval may be an interval during which the transmitting UE performs energy detection to distinguish whether the receiving UE did not transmit PSFCH due to missing PSCCH/PSSCH or due to successful decoding of PSCCH/PSSCH but subsequent LBT failure for PSFCH transmission. For example, missing PSCCH/PSSCH may be due to SCI decoding failure at the receiving UE receiving PSCCH/PSSCH. The transmitting UE may determine the sensing interval for the receiving UE's LBT and may perform sensing for distinguishing PSFCH reception during this interval. For example, the transmitting UE may identify which type of LBT the receiving UE performs to transmit PSFCH and may perform sensing or LBT operations for distinguishing PSFCH reception during the LBT sensing interval of the receiving UE's PSFCH transmission. For example, the LBT type may be Type 1 LBT. For example, the LBT type may be Type 2 LBT. For example, the LBT type may be Type 3 LBT. The present disclosure proposes a UE operation whereby the transmitting UE specifies via signaling the LBT type for PSFCH transmission to the receiving UE. For example, the signaling may be via SCI. For example, the signaling may be via MAC CE. For example, the signaling may be via a PC5-RRC message. For example, the LBT type may be Type 1 LBT. For example, the LBT type may be Type 2 LBT. For example, the LBT type may be Type 3 LBT. The present disclosure proposes an operation wherein the receiving UE signals to the transmitting UE the LBT type it applies to perform PSFCH transmission. For example, the signaling may be via SCI. For example, the signaling may be via MAC CE. For example, the signaling may be via a PC5-RRC message. For example, the LBT type may be Type 1 LBT. For example, the LBT type may be Type 2 LBT. For example, the LBT type may be Type 3 LBT.

For example, according to the present disclosure, a transmitting UE may perform sidelink (SL) radio link monitoring (RLM) (e.g., measuring L1 RSRP or SINR/RSRQ of sidelink resources) to check the status of the sidelink channel. For example, the transmitting UE or UE may check the sidelink channel quality based on a sidelink CSI reporting procedure. For example, when discontinuous transmission (DTX) occurs even though the sidelink channel condition has been confirmed to be above a threshold through SL RLM or SL CSI reporting, the transmitting UE may transmit sidelink control information (SCI) to the receiving UE to ask whether PSFCH transmission was not performed due to LBT failure for the PSFCH transmission. For example, when DTX occurs even though the sidelink channel condition has been confirmed to be above a threshold through SL RLM or SL CSI reporting, the transmitting UE may transmit a MAC CE to the receiving UE to ask whether PSFCH transmission was not performed due to LBT failure for the PSFCH transmission. For example, when DTX occurs even though the sidelink channel condition has been confirmed to be above a threshold through SL RLM or SL CSI reporting, the transmitting UE may transmit a PC5 RRC message to the receiving UE to ask whether PSFCH transmission was not performed due to LBT failure for the PSFCH transmission. For example, upon receiving the corresponding SCI, MAC CE, or PC5 RRC message, the receiving UE may send, in response, the number of PSFCH transmissions not performed due to LBT failure to the transmitting UE via SCI, MAC CE, or a PC5 RRC message. For example, the number of PSFCH transmissions may relate to instances where PSFCH transmissions were not performed due to LBT failures. For example, upon receiving the number of times that PSFCH transmission was not performed due to LBT failures from the receiving UE, the transmitting UE may decrement its DTX count by that number.

For example, the transmitting UE may request information related to the number of PSFCH transmissions not performed due to LBT failures from the receiving UE when the following conditions are satisfied.
- when the number of consecutive DTX occurrences reaches or exceeds a threshold, the threshold may be configured to a smaller value than the maximum number of DTX defined for SL RLF procedures in conventional licensed bands.
- when sidelink channel quality based on CSI reporting is above a threshold, and the number of consecutive DTX occurrences reaches or exceeds a threshold.
- when the measured energy level or the measured CBR value of the sidelink resource pool is above a threshold.
- upon expiration of a timer (e.g., when the transmitting UE sends an SCI/MAC CE/PC5 RRC message requesting information related to the number of PSFCH transmissions not performed due to LBT failures to the receiving UE, it starts a timer and waits for a response from the receiving UE until the timer expires). If there is no response from the receiving UE by the expiration of the timer, the transmitting UE may retransmit the SCI/MAC CE/PC5 RRC message requesting information related to the number of PSFCH transmissions not performed due to LBT failures up to a predefined threshold.

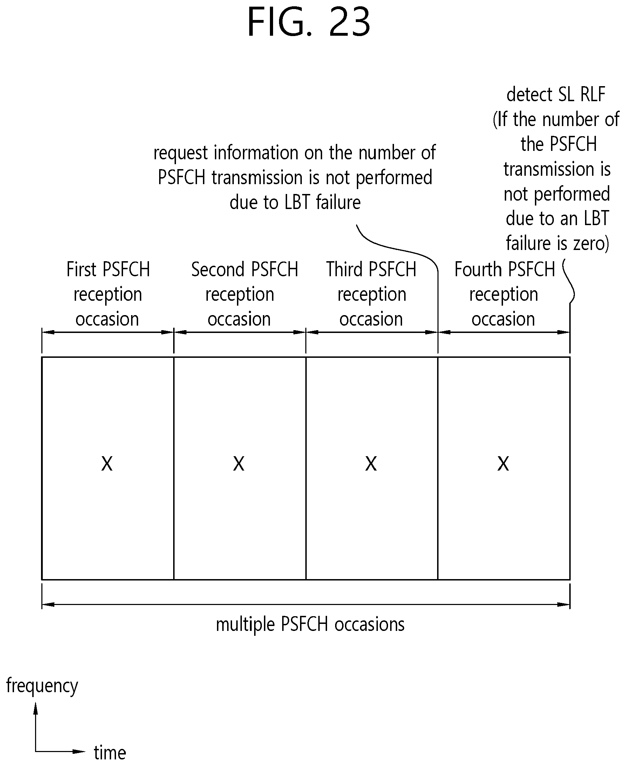

FIG. 23 shows an example of detecting an SL RLF, based on an embodiment of the present disclosure. The embodiment of FIG. 23 may be combined with various embodiments of the present disclosure.

Referring to FIG. 21, a UE may perform the following operations for a PSFCH reception occasion. For example, a MAC entity of the UE may perform the following operations for a PSFCH reception occasion. For example, a MAC entity associated with a sidelink HARQ entity of the UE may perform the following operations for a PSFCH reception occasion:
- If PSFCH reception is absent at a PSFCH reception occasion, the number of DTXs may be incremented by 1. For example, if PSFCH reception is absent at the first PSFCH reception occasion, the number of DTXs may be incremented by 1. If PSFCH reception is absent at the second PSFCH reception occasion, the number of DTXs may be incremented by 1. If PSFCH reception is absent at the third PSFCH reception occasion, the number of DTXs may be incremented by 1. If PSFCH reception is absent at the fourth PSFCH reception occasion, the number of DTXs may be incremented by 1.
- For example, if energy detection during the GAP interval between a PSCCH/PSSCH transmission slot and a PSFCH slot indicates that the energy level is above a threshold, but PSFCH for the PSCCH/PSSCH transmission is not received from the receiving UE, the transmitting UE may determine that the receiving UE does not transmit the PSFCH due to SL LBT failure for PSFCH transmission, and thus may not increment the number of DTXs. For example, the GAP interval may be an interval during which the transmitting UE performs energy detection to determine whether the receiving UE does not transmit PSFCH due to missing PSCCH/PSSCH or due to successful decoding of PSCCH/PSSCH but SL LBT failure for PSFCH transmission. For example, the GAP interval may be configured by the base station for the UE. For example, the GAP interval may be pre-configured. For example, missing PSCCH/PSSCH may correspond to a decoding failure of SCI for PSCCH/PSSCH by the receiving UE. For example, the energy level threshold may be a threshold used by the transmitting UE during energy detection to determine whether the receiving UE does not transmit PSFCH due to missing PSCCH/PSSCH or due to successful decoding of PSCCH/PSSCH but SL LBT failure for PSFCH transmission.
- For example, if energy detection during the GAP interval between a PSCCH/PSSCH transmission slot and a PSFCH slot indicates that the energy level is below a threshold and PSFCH for PSCCH/PSSCH transmission is not received from the receiving UE, the transmitting UE may determine that the receiving UE did not receive or failed to decode PSCCH/PSSCH, and thus may increment the number of DTXs by "1". For example, the GAP interval may be an interval during which the transmitting UE performs energy detection to determine whether the receiving UE does not transmit PSFCH due to missing PSCCH/PSSCH or due to successful decoding of PSCCH/PSSCH but SL LBT failure for PSFCH transmission. For example, the GAP interval may be configured by the base station for the UE. For example, the GAP interval may be pre-configured. For example, missing PSCCH/PSSCH may correspond to a decoding failure of SCI for PSCCH/PSSCH by the receiving UE. For example, the energy level threshold may be a threshold used by the transmitting UE during energy detection to determine whether the receiving UE does not transmit PSFCH due to missing PSCCH/PSSCH or due to successful decoding of PSCCH/PSSCH but SL LBT failure for PSFCH transmission.
- If the number of DTXs reaches the maximum number of DTX configured for requesting information related to the number of PSFCH transmissions not performed due to LBT failures, information related to the number of PSFCH transmissions not performed due to LBT failures may be requested. For example, if the number of DTXs reaches the maximum number of DTX configured for requesting information related to the number of PSFCH transmissions not performed due to LBT failures, information related to the number of PSFCH transmissions not performed due to LBT failures may be requested from the UE transmitting the PSFCH. For example, the maximum number of DTX configured for requesting information related to the number of PSFCH transmissions not performed due to LBT failures may be configured by RRC. For example, the maximum number of DTX configured for requesting information related to the number of PSFCH transmissions not performed due to LBT failures may be configured by a base station. For example, the maximum number of DTX configured for requesting information related to the number of PSFCH transmissions not performed due to LBT failures may be pre-configured. For example, as shown in FIG. 23, the maximum number of DTX configured for requesting information related to the number of PSFCH transmissions not performed due to LBT failures may be configured as 3. For example, as shown in FIG. 23, the number of PSFCH transmissions not performed due to LBT failures may be zero.
- For example, according to the present disclosure, a transmitting UE may perform sidelink radio link monitoring (SL RLM) (for example, measuring L1 RSRP or SINR/RSRQ of sidelink resources) and check the sidelink channel status. A transmitting UE or UE may check sidelink channel quality based on a sidelink CSI reporting procedure. If DTX occurs despite confirming that the sidelink channel status exceeds a threshold through SL RLM or the SL CSI reporting procedure, the transmitting UE may transmit SCI to the receiving UE to request information related to whether the PSFCH transmission was not performed due to an LBT failure. If DTX occurs despite confirming that the sidelink channel status exceeds a threshold through SL RLM or the SL CSI reporting procedure, the transmitting UE may transmit MAC CE to the receiving UE to request information related to whether the PSFCH transmission was not performed due to an LBT failure. If DTX occurs despite confirming that the sidelink channel status exceeds a threshold through SL RLM or the SL CSI reporting procedure, the transmitting UE may transmit a PC5 RRC message to the receiving UE to request information related to whether the PSFCH transmission was not performed due to an LBT failure. Upon receiving the corresponding SCI, MAC CE, or PC5 RRC message, the receiving UE may respond by transmitting the number of PSFCH transmissions not performed due to LBT failures to the transmitting UE through SCI, MAC CE, or a PC5 RRC message. The number of PSFCH transmissions may be related to occurrences in which PSFCH transmission was not performed due to LBT failures. Upon receiving from the receiving UE the number of PSFCH transmissions not performed due to LBT failures, the transmitting UE may decrement the DTX count by that number.
- If the number of DTXs reaches the maximum number of DTXs for detecting SL RLF, the SL RLF may be detected. For example, the maximum number of DTXs for detecting SL RLF may be configured by the RRC. For example, the maximum number of DTXs for detecting SL RLF may be configured by the base station. For example, the maximum number of DTXs for detecting SL RLF may be preconfigured. For example, according to FIG. 23, the maximum number of DTXs for detecting SL RLF may be configured as 4.

For example, UE may perform Sidelink radio link failure related actions as follows. For example, RRC layer of UE may perform Sidelink radio link failure related actions as follows. For example, upon indication from sidelink RLC entity that the maximum number of retransmissions for a specific destination has been reached:
- UE may consider sidelink radio link failure to be detected for this destination;
- UE may release the DRBs of this destination (e.g., release the DRBs of this destination, according to clause 5.8.9.1a.1),
- UE may release the SRBs of this destination (e.g., release the SRBs of this destination, according to clause 5.8.9.1a.3),
- UE may release the PC5 Relay RLC channels of this destination if configured (e.g., release the PC5 Relay RLC channels of this destination if configured, in according to clause 5.8.9.7.1),
- UE may discard the NR sidelink communication related configuration of this destination;
- UE may reset the sidelink specific MAC of this destination;
- UE may consider the PC5-RRC connection is released for the destination;
- UE may indicate the release of the PC5-RRC connection to the upper layers for this destination (e.g.. PC5 is unavailable);
- if UE is in RRC_CONNECTED, and if the UE is acting as L2 U2N Remote UE for the destination, UE may initiate the RRC connection re-establishment procedure (e.g., initiate the RRC connection re-establishment procedure as specified in 5.3.7).
- if UE is in RRC_CONNECTED, and if the UE is not acting as L2 U2N Remote UE for the destination, UE may perform the sidelink UE information for NR sidelink communication procedure (e.g., UE may perform the sidelink UE information for NR sidelink communication procedure, as specified in 5.8.3.3);
- It may be up to UE implementation on whether and how to indicate to upper layers to maintain the keep-alive procedure.

FIG. 23 shows a first to a fourth PSFCH reception occasion, but is not limited thereto. FIG. 23 shows the maximum number of DTX configured for requesting information related to the number of PSFCH transmissions not performed due to LBT failure as 3, but is not limited thereto. FIG. 23 shows the number of PSFCH transmissions not performed due to LBT failure as 0, but is not limited thereto. FIG. 23 shows the maximum number of DTX for detecting SL RLF as 4, but is not limited thereto.

For example, according to the present disclosure, a transmitting UE may perform SL RLM (e.g., performing L1 RSRP measurements of sidelink resources or performing SINR/RSRQ measurements) to check sidelink channel status. The transmitting UE or UE may check the quality of a sidelink channel based on a sidelink CSI reporting procedure. For example, even if the transmitting UE confirms that the sidelink channel status is above a threshold through SL RLM or the SL CSI reporting procedure, if DTX occurs (above the threshold), the transmitting UE may perform an LBT operation for the purpose of its own data transmission. The transmitting UE may perform LBT even when there is no logical channel data or MAC CE to transmit, measure the energy level, and if the measured energy level is equal to or greater than the threshold, determine that the receiving UE has failed PSFCH transmission due to LBT failure, and decrement the DTX count by the number of DTXs previously incremented due to absence of PSFCH reception.

For example, according to the present disclosure, the transmitting UE and the receiving UE propose consistent LBT failure handling and DTX-based RLF declaration operations as described below.

When PSFCH associated with the PSSCH transmitted by a transmitting UE is configured with multiple occasions (e.g., multiple PSFCH occasions/opportunities), a receiving UE may retransmit the PSFCH on the next PSFCH occasion if LBT failure occurs for PSFCH transmission corresponding to the PSCCH/PSSCH reception. For example, the receiving UE may report the PSFCH transmission failure due to LBT failure (e.g., the number of PSFCH occasions where LBT failed, resource information related to PSCCH/PSSCH associated with PSFCH occasions where LBT failed, for the purpose of allowing the transmitting UE to distinguish for which PSCCH/PSSCH the PSFCH reception was absent due to LBT failure) to the transmitting UE via SCI, MAC CE, or a PC5-RRC message. When receiving the LBT failure report from the receiving UE, the transmitting UE may decrement the number of DTXs previously incremented due to absence of PSFCH reception related to PSCCH/PSSCH transmissions, by the number of PSFCH transmission failures caused by LBT failures included in the report transmitted by the receiving UE. For example, the transmitting UE initiates a timer at the PSFCH occasion associated with the transmitted PSCCH/PSSCH or at the "PSFCH occasion + pre-configured offset" and runs the timer for a pre-configured duration. For example, in case of multiple PSFCH occasion operation, the transmitting UE may start a timer at a PSFCH occasion associated with the transmitted PSCCH/PSSCH or at a "PSFCH occasion + pre-configured offset" and the timer runs for a pre-configured duration. For example, the UE may start a timer at the first PSFCH occasion among PSFCH occasions, or at the last PSFCH occasion. If the transmitting UE determines that the number of DTXs reaches the threshold for declaring sidelink RLF before the timer expires, the transmitting UE may not declare sidelink RLF but may wait until the timer expires for an LBT failure report from the receiving UE (e.g., the number of PSFCHs failed due to LBT failure, or information related to PSCCH/PSSCH resources associated with the PSFCH that failed LBT (e.g., to enable the transmitting UE to distinguish for which PSCCH/PSSCH the PSFCH was not received due to LBT failure)). For example, if the transmitting UE does not receive an LBT failure report from the receiving UE until the timer expires, the transmitting UE declares a sidelink RLF, releases the PC5 RRC connection in which the number of DTXs has reached or exceeded the threshold, and reports the sidelink RLF occurrence to higher layers and the serving base station. For example, if the transmitting UE does not receive an LBT failure report from the receiving UE until the timer expires, the transmitting UE declares a sidelink RLF, releases the PC5 RRC connection in which the number of DTXs has reached or exceeded the threshold, and reports the occurrence of the sidelink RLF together with the destination layer-2 ID (the destination ID where the sidelink RLF has occurred) to higher layers and the serving base station. For example, the receiving UE may also start a timer for the LBT failure report, similarly to the transmitting UE. For example, the receiving UE may start a timer at a PSFCH occasion associated with the PSCCH/PSSCH transmitted by the transmitting UE, and the timer runs for a pre-configured duration. For example, the receiving UE may start a timer at a "PSFCH occasion + pre-configured offset" associated with the PSCCH/PSSCH transmitted by the transmitting UE, and the timer runs for a pre-configured duration. For example, in case of multiple PSFCH occasion operation, the receiving UE may start a timer at a PSFCH occasion or at a "PSFCH occasion + pre-configured offset" associated with the PSCCH/PSSCH transmitted by the transmitting UE, and the timer runs for a pre-configured duration. For example, the receiving UE may start a timer either at the first PSFCH occasion among PSFCH occasions or at the last PSFCH occasion. The receiving UE may start a timer and transmit the LBT failure report to the transmitting UE before the timer expires. The receiving UE may start a timer and transmit an LBT failure report to the transmitting UE if the number of PSFCH transmission failures due to LBT failure reaches or exceeds N (configured or pre-configured by the base station or the UE). For example, the transmitting UE may start a timer and remain in a wake-up state (e.g., monitoring PSCCH/PSSCH of the peer UE) by considering the timer duration as an SL DRX active time for its reception operation until the timer expires upon receiving the LBT failure report from the receiving UE.

For example, according to the present disclosure, to reduce the impact of PSFCH transmission failure caused by the receiving UE's LBT failure on the transmitting UE's DTX counting, the transmitting UE may perform measurements such as energy measurement or RSSI/RSRQ/SINR measurement, and depending on each measurement value/range (or when a measurement value/range is equal to or greater than a configured threshold), whether to increment the DTX counting, the increment value/weight related to DTX counting, or the decrement value applied to the previously accumulated DTX counting may be differently configured (e.g., configured or pre-configured by the base station).

For example, according to the present disclosure, in a plurality of PSSCH slots associated with a PSFCH, when a transmitting UE performs multiple PSCCH/PSSCH transmissions using different SL-CAPC values, the transmitting UE may perform LBT (e.g., energy measurement) based on the lowest (or highest) SL-CAPC value among them (e.g., among the different SL-CAPC values), and then, based on this result (e.g., whether LBT has succeeded or failed, or whether the measured energy level is above or below a threshold), the transmitting UE may determine whether the receiving UE did not send the PSFCH due to LBT failure. For example, if the transmitting UE detects an LBT failure or confirms that the measured energy level is equal to or greater than a threshold, and if PSFCH reception is absent for the transmitted PSCCH/PSSCH, the transmitting UE may determine that the receiving UE failed to perform PSFCH transmission due to LBT failure, and may not increment the number of DTXs (e.g., the transmitting UE may increment this number of DTXs by 1 when a DTX occurs for sidelink RLF declaration).

For example, effects related to the present disclosure may be as follows. Accurate diagnosis of channel conditions may be possible. For example, by enabling the transmitting UE to distinguish between PSCCH/PSSCH decoding failure and SL LBT failure for HARQ feedback transmission through PSFCH, more accurate channel condition diagnosis may become possible. Optimization of resource management may be possible. For example, by avoiding increment of the number of DTXs, unnecessary RLF detection can be prevented, thereby improving transmission efficiency and enabling more efficient use of network resources. Communication quality may be improved. For example, by accurately identifying the cause of transmission failure using energy detection, overall reliability and performance of the SL communication system can be improved. User experience may be enhanced. By reducing error rates and improving transmission efficiency, users may have a more stable data transmission experience. Unnecessary RLF detection can be prevented. For example, by not incrementing the number of DTXs during SL LBT failure, it is possible to prevent falsely identifying a busy channel condition (e.g., LBT failure) as an actual link failure. This can prevent the network from unnecessarily initiating a sidelink radio link failure procedure. Resource release can be avoided. For example, since the number of DTXs is not incremented, the system does not reach the threshold typically leading to resource release, thereby maintaining a continuous communication session of the user equipment (UE). Configuration can be maintained. For example, by not arbitrarily incrementing the number of DTXs, premature discarding of NR sidelink communication configuration related to the destination can be prevented, and premature discarding of NR sidelink communication configuration may require reconfiguration and potential signaling overhead and delays. PC5-RRC connection can be maintained. For example, the PC5-based RRC connection may be considered ongoing and may not be released. This ensures that the connection remains available for use by upper layers and avoids resulting in an indication of PC5 unavailability. Stability of sidelink communication can be ensured. For example, for a UE in an RRC_CONNECTED state, particularly when serving as a layer 2 U2N (user equipment to network) Remote UE, by not counting DTX, the need to initiate an RRC connection re-establishment procedure can be avoided. For example, if a radio link failure is deemed to have occurred, this procedure may be required. Operational efficiency can be secured. For example, by intelligently managing the number of DTXs, the network can distinguish between temporary and persistent issues, apply context-appropriate management, and maintain high levels of operational efficiency and user satisfaction.

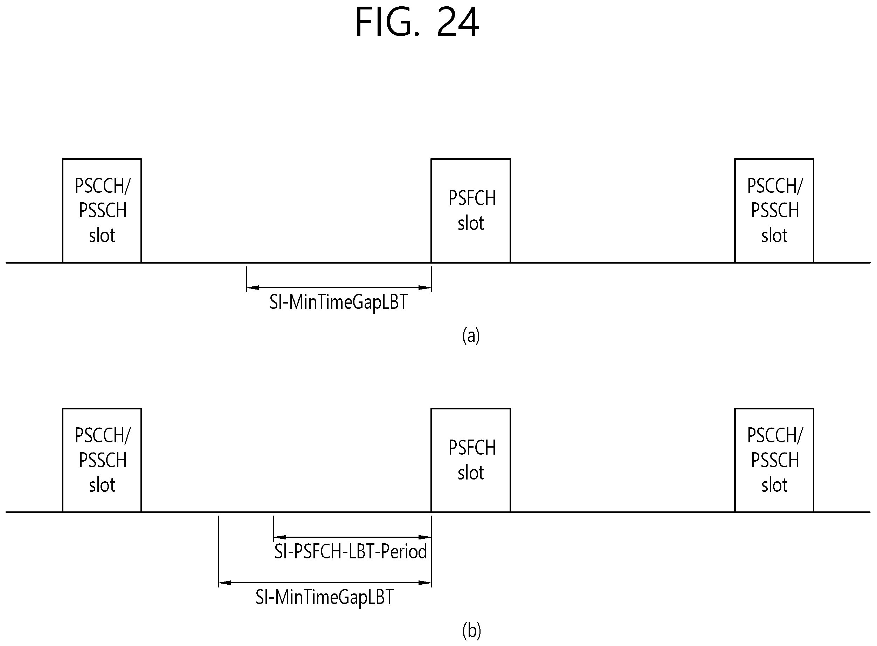

FIG. 24 shows a sidelink resource pool configuration for guaranteeing an energy detection period for PSFCH reception of a transmitting UE, based on an embodiment of the present disclosure. Specifically, FIG. 24(a) shows an example where "Sl-MinTimeGapLBT" exists between a PSCCH/PSSCH slot and a PSFCH slot, and FIG. 24(b) shows an example where both "Sl-MinTimeGapLBT" and "SL-PSFCH-LBT-Period" exist between a PSCCH/PSSCH slot and a PSFCH slot. The embodiment of FIG. 24 may be combined with various embodiments of the present disclosure.

Referring to FIG. 24(a), "Sl-MinTimeGapLBT" may exist between a PSCCH/PSSCH slot and a PSFCH slot. Referring to FIG. 24(b), "Sl-MinTimeGapLBT" and "SL-PSFCH-LBT-Period" may exist between a PSCCH/PSSCH slot and a PSFCH slot.

According to the present disclosure, a method is proposed for configuring a sidelink resource pool so that when a transmitting UE configures a sidelink resource pool, it guarantees a period for energy detection or sensing to determine whether the receiving UE did not transmit a PSFCH due to failure to receive PSCCH/PSSCH or due to successful PSCCH/PSSCH decoding but an LBT failure for PSFCH transmission. For example, failure to receive PSCCH/PSSCH may be due to decoding failure of the SCI related to PSCCH/PSSCH at the receiving UE receiving the PSCCH/PSSCH. For example, when configuring a sidelink resource pool, the base station may configure sl-MinTimeGapLBT in the PSFCH configuration (sl-PSFCH-Config) of the sidelink resource pool. For example, a sidelink resource pool configured for PSFCH may guarantee a minimum period (sl-MinTimeGapLBT) between a PSSCH slot and a PSFCH slot to perform energy detection or sensing, enabling the transmitting UE to determine whether the receiving UE did not transmit PSFCH due to failure to receive PSCCH/PSSCH or due to successful PSCCH/PSSCH decoding but an LBT failure for PSFCH transmission. For example, failure to receive PSCCH/PSSCH may be due to decoding failure of the SCI related to PSCCH/PSSCH at the receiving UE receiving the PSCCH/PSSCH. For example, when configuring a sidelink resource pool (or configuring the PSFCH configuration (sl-PSFCH-Config) of a sidelink resource pool), the period (sl-PSFCH-LBT-period) for performing LBT, energy detection, or sensing for PSFCH may be configured for each sidelink resource pool. For example, as shown in FIG. 24(a), the sidelink resource pool may perform LBT, energy detection, or sensing for PSFCH monitoring during the sl-PSFCH-LBT-period within the minimum period (sl-MinTimeGapLBT) configured between a PSSCH slot and a PSFCH slot for energy detection or sensing The sl-PSFCH-LBT-period may be configured to be less than or equal to sl-MinTimeGapLBT.

The sl-MinTimeGapLBT, sl-PSFCH-LBT-Period, sl-PSFCH-LBT-Failure-Threshold, sl-PSFCH-LBT-Type, and sl-PSFCH-CAPC proposed in the present disclosure may be configured in the SL-PSFCH-Config field, but may alternatively be configured in the SL-ResourcePool.

The SL-PSFCH-Config field may include the following parameters:
- sl-MinTimeGapPSFCH: The minimum time gap between PSFCH and the associated PSSCH in the unit of slots.
- sl-NumMuxCS-Pair: Indicates the number of cyclic shift pairs used for a PSFCH transmission that can be multiplexed in a PRB.
- sl-PSFCH-CandidateResourceType: Indicates the number of PSFCH resources available for multiplexing HARQ-ACK information in a PSFCH transmission (see TS 38.213 [13], clause 16.3).
- sl-PSFCH-HopID: Scrambling ID for sequence hopping of the PSFCH used in the resource pool.
- sl-PSFCH-Period: Indicates the period of PSFCH resource in the unit of slots within this resource pool. If set to s10, no resource for PSFCH, and HARQ feedback for all transmissions in the resource pool is disabled.
- sl-PSFCH-RB-Set: Indicates the set of PRBs that are actually used for PSFCH transmission and reception. The leftmost bit of the bitmap refers to the lowest RB index in the resource pool, and so on. Value 0 in the bitmap indicates that the corresponding PRB is not used for PSFCH transmission and reception while value 1 indicates that the corresponding PRB is used for PSFCH transmission and reception (see TS 38.213 [13]).
- Sl-MinTimeGapLBT: The minimum required time gap (in units of slots) between PSSCH and PSFCH, used by the transmitting UE to perform energy detection (or sensing) for PSFCH.
- sl-PSFCH-LBT-Period: A periodicity (in units of slots) at which the UE performs LBT (or energy detection or sensing) for PSFCH within the sidelink resource pool.
- sl-PSFCH-LBT-Failure-Threshold: An energy level threshold (or CBR threshold, RSSI threshold, or RSRP threshold) used by the transmitting UE to distinguish whether the receiving UE did not transmit PSFCH due to non-reception of PSCCH/PSSCH (or SCI decoding failure), or due to a successful PSCCH/PSSCH decoding but an LBT failure for PSFCH transmission.
- sl-PSFCH-LBT-Type: Indicates the LBT type (Type-1 LBT, Type-2a LBT, Type-2b LBT, or Type-2c LBT) the UE performs for PSFCH transmission. The UE may determine the LBT type for PSFCH transmission according to the LBT type configured in the resource pool or the PSFCH configuration.
- sl-PSFCH-CAPC: The SL-CAPC used when performing Type-1 LBT for PSFCH transmission. The UE may determine the SL-CAPC value used during Type-1 LBT for PSFCH transmission according to the sl-PSFCH-CAPC configured in the resource pool or the PSFCH configuration.
- sl-PSFCH-Typel-LBT-startoffset: An offset indicating the start timing for Type-1 LBT operation (for example, sensing whether a sidelink unlicensed band channel is idle or busy) performed by the UE transmitting PSFCH. The UE transmitting PSFCH may start Type-1 LBT operation at a timing offset by S1-PSFCH-Type1- LBT-startoffset from the PSSCH slot boundary.

When the transmitting UE does not receive a PSFCH from the receiving UE corresponding to the transmitted PSCCH/PSSCH despite the energy level measured during LBT operation for PSFCH monitoring being equal to or greater than sl-PSFCH-LBT-Failure-Threshold, the transmitting UE may consider that the receiving UE did not transmit the PSFCH due to LBT failure in the sidelink unlicensed band, and may not increment the number of DTXs used for declaring sidelink RLF by ("1"). For example, the PSFCH may be related to ACK feedback. For example, the PSFCH may be related to NACK feedback. For example, the LBT operation may be an energy detection operation. For example, the LBT operation may be a sensing operation. For example, the energy level may be a CBR level. For example, the energy level may be an RSSI level. For example, the energy level may be an RSRP level. When the transmitting UE does not receive a PSFCH from the receiving UE corresponding to the transmitted PSCCH/PSSCH despite the energy level measured during LBT operation for PSFCH monitoring being equal to or greater than sl-PSFCH-LBT-Failure-Threshold, the transmitting UE may consider that the receiving UE did not transmit the PSFCH due to LBT failure in the sidelink unlicensed band, and may increment the number of DTXs used for declaring sidelink RLF by "1". For example, the PSFCH may be related to ACK feedback. For example, the PSFCH may be related to NACK feedback. For example, the LBT operation may be an energy detection operation. For example, the LBT operation may be a sensing operation. For example, the energy level may be a CBR level. For example, the energy level may be an RSSI level. For example, the energy level may be an RSRP level. If the transmitting UE does not receive a PSFCH from the receiving UE corresponding to the transmitted PSCCH/PSSCH and the energy level measured during LBT operation for PSFCH monitoring is equal to or less than sl-PSFCH-LBT-Failure-Threshold, the transmitting UE may consider that the receiving UE did not transmit the PSFCH due to reception or decoding failure of PSCCH/PSSCH, and may increment the number of DTXs by ("1"). For example, the LBT operation may be an energy detection operation. For example, the LBT operation may be a sensing operation. For example, the energy level may be a CBR level. For example, the energy level may be an RSSI level. For example, the energy level may be an RSRP level. For example, the PSFCH may be related to ACK feedback. For example, the PSFCH may be related to NACK feedback.

For example, the transmitting UE may monitor PSFCH reception corresponding to PSCCH/PSSCH transmission. For example, when PSFCH reception is absent from the receiving UE, the transmitting UE may perform an energy detection, CBR measurement, RSSI measurement, or RSRP measurement during a specific duration to distinguish whether the receiving UE did not transmit PSFCH due to missed reception or SCI decoding failure of PSCCH/PSSCH or due to an LBT failure for PSFCH transmission. For example, the specific duration may be sl-PSFCH-LBT-Period. For example, it may be sl-PSFCH-Period. For example, it may be sl-PSFCH-RB-Set, or the like. For example, the starting point of the energy detection, CBR measurement, RSSI measurement, or RSRP measurement operation performed by the transmitting UE may be a time offset from the PSSCH slot point by S1-PSFCH-Type1-LBT-startoffset. For example, the transmitting UE may perform the LBT operation for PSFCH reception at a time offset from the PSSCH slot point by S1-PSFCH-Type1-LBT-startoffset, referencing the configured S1-PSFCH-Type1-LBT-startoffset in the sidelink resource pool. For example, the LBT operation for PSFCH reception may be an energy detection operation. For example, the LBT operation for PSFCH reception may be a CBR measurement operation. For example, the LBT operation for PSFCH reception may be an RSSI measurement operation. For example, the LBT operation for PSFCH reception may be an RSRP measurement operation.

For example, according to the present disclosure, the transmitting UE may perform an LBT operation during the sl-PSFCH-Period to distinguish whether the receiving UE did not transmit PSFCH due to missed reception of PSCCH/PSSCH or due to an LBT failure for PSFCH transmission even though decoding of PSCCH/PSSCH was successful. For example, sl-PSFCH-Period may be sl-PSFCH-RB-Set. For example, the missed reception of PSCCH/PSSCH may be due to a decoding failure of SCI related to PSCCH/PSSCH by the receiving UE. For example, the LBT operation may be an energy detection operation. For example, the LBT operation may be a sensing operation.

Table 13 shows an example of sidelink channel busy ratio (SL CBR) and sidelink received signal strength indicator (SL RSSI).

**[Table 13]**

| **SL CBR** | |
|---|---|
| **Definition** | SL Channel Busy Ratio (SL CBR) measured in slot *n* is defined as the portion of sub-channels in the resource pool whose SL RSSI measured by the UE exceed a (pre-)configured threshold sensed over a CBR measurement window [*n-a, n*-1], wherein a is equal to 100 or 100·2^{µ} slots, according to higher layer parameter *timeWindowSize-CBR.* |
| **Applicable for** | RRC_IDLE intra-frequency, |
| | RRC_IDLE inter-frequency, |
| | RRC_CONNECTED intra-frequency, |
| | RRC_CONNECTED inter-frequency |

| **SL RSSI** | |
|---|---|
| **Definition** | Sidelink Received Signal Strength Indicator (SL RSSI) is defined as the linear average of the total received power (in [W]) observed in the configured sub-channel in OFDM symbols of a slot configured for PSCCH and PSSCH, starting from the 2^{nd} OFDM symbol. |
| | For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| **Applicable for** | RRC_IDLE intra-frequency, |
| | RRC_IDLE inter-frequency, |
| | RRC_CONNECTED intra-frequency, |
| | RRC_CONNECTED inter-frequency |

Referring to Table 13, the slot index may be based on the physical slot index.

In various embodiments of the present disclosure, "channel" may be applied by replacing "carrier" or "resource block set of a specific carrier" or "band".

For example, whether or not (some of) the proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not (some of) the proposed schemes/rules of the present disclosure are applied and/or related parameters (e.g., thresholds) may be specifically (or differently or independently) configured based on whether LBT succeeds/fails, per LBT-related energy detection levels, per sidelink channels (PSCCH/PSSCH, PSFCH, SL-SSB (or S-SSB)), based on whether MCSt (Multi-Consecutive Slot Transmission) is applied, based on whether multi-PSFCH occasions are applied, based on resource order/location consist of MCSt, based on whether multiple starting points are configured within one slot, based on whether the 1st starting point (or 2nd starting point) is applied, etc.

For example, whether or not (some of) the proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be specifically (and/or independently and/or differently) configured depending on whether PUCCH configuration is supported. For example, whether or not the proposed rule of the present disclosure is applied and/or related parameter configuration value(s) may be specifically (and/or independently and/or differently) configured when a PUCCH resource is configured. For example, whether or not the proposed rule of the present disclosure is applied and/or related parameter configuration value(s) may be specifically (and/or independently and/or differently) configured when a PUCCH resource is not configured. For example, whether or not the proposed rule of the present disclosure is applied and/or related parameter configuration value(s) may be specifically (and/or independently and/or differently) configured for each resource pool. For example, whether or not the proposed rule of the present disclosure is applied and/or related parameter configuration value(s) may be specifically (and/or independently and/or differently) configured for a resource pool with PSFCH configured. For example, whether or not the proposed rule of the present disclosure is applied and/or related parameter configuration value(s) may be specifically (and/or independently and/or differently) configured for a resource pool without PSFCH configured. For example, whether or not the proposed rule of the present disclosure is applied and/or related parameter configuration value(s) may be specifically (and/or independently and/or differently) configured for specific sidelink logical channels. For example, whether or not the proposed rule of the present disclosure is applied and/or related parameter configuration value(s) may be specifically (and/or independently and/or differently) configured for specific sidelink logical channel groups. For example, whether or not the proposed rule of the present disclosure is applied and/or related parameter configuration value(s) may be specifically (and/or independently and/or differently) configured for specific Uu logical channels. For example, whether or not the proposed rule of the present disclosure is applied and/or related parameter configuration value(s) may be specifically (and/or independently and/or differently) configured for specific Uu logical channel groups. For example, whether or not the proposed rule of the present disclosure is applied and/or related parameter configuration value(s) may be specifically (and/or independently and/or differently) configured depending on service/packet type. For example, whether or not the proposed rule of the present disclosure is applied and/or related parameter configuration value(s) may be specifically (and/or independently and/or differently) configured depending on service/packet priority. For example, whether or not the proposed rule of the present disclosure is applied and/or related parameter configuration value(s) may be specifically (and/or independently and/or differently) configured for each QoS profile. For example, whether or not the proposed rule of the present disclosure is applied and/or related parameter configuration value(s) may be specifically (and/or independently and/or differently) configured for QoS requirements. For example, whether or not the proposed rule of the present disclosure is applied and/or related parameter configuration value(s) may be specifically (and/or independently and/or differently) configured for QoS requirements related to URLLC/EMBB traffic. For example, whether or not the proposed rule of the present disclosure is applied and/or related parameter configuration value(s) may be specifically (and/or independently and/or differently) configured for reliability-related QoS requirements. For example, whether or not the proposed rule of the present disclosure is applied and/or related parameter configuration value(s) may be specifically (and/or independently and/or differently) configured for latency-related QoS requirements. For example, whether or not the proposed rule of the present disclosure is applied and/or related parameter configuration value(s) may be specifically (and/or independently and/or differently) configured for PQI. For example, whether or not the proposed rule of the present disclosure is applied and/or related parameter configuration value(s) may be specifically (and/or independently and/or differently) configured for PFI. For example, whether or not the proposed rule of the present disclosure is applied and/or related parameter configuration value(s) may be specifically (and/or independently and/or differently) configured for cast types. For example, whether or not the proposed rule of the present disclosure is applied and/or related parameter configuration value(s) may be specifically (and/or independently and/or differently) configured for unicast cast type. For example, whether or not the proposed rule of the present disclosure is applied and/or related parameter configuration value(s) may be specifically (and/or independently and/or differently) configured for groupcast cast type. For example, whether or not the proposed rule of the present disclosure is applied and/or related parameter configuration value(s) may be specifically (and/or independently and/or differently) configured for broadcast cast type. For example, whether or not the proposed rule of the present disclosure is applied and/or related parameter configuration value(s) may be specifically (and/or independently and/or differently) configured for congestion levels of resource pools. For example, whether or not the proposed rule of the present disclosure is applied and/or related parameter configuration value(s) may be specifically (and/or independently and/or differently) configured for CBR. For example, whether or not the proposed rule of the present disclosure is applied and/or related parameter configuration value(s) may be specifically (and/or independently and/or differently) configured for SL HARQ feedback types. For example, whether or not the proposed rule of the present disclosure is applied and/or related parameter configuration value(s) may be specifically (and/or independently and/or differently) configured for NACK-only HARQ feedback. For example, whether or not the proposed rule of the present disclosure is applied and/or related parameter configuration value(s) may be specifically (and/or independently and/or differently) configured for ACK/NACK HARQ feedback. For example, whether or not the proposed rule of the present disclosure is applied and/or related parameter configuration value(s) may be specifically (and/or independently and/or differently) configured for HARQ Feedback Enabled MAC PDU transmission. For example, whether or not the proposed rule of the present disclosure is applied and/or related parameter configuration value(s) may be specifically (and/or independently and/or differently) configured for HARQ Feedback Disabled MAC PDU transmission. For example, whether or not the proposed rule of the present disclosure is applied and/or related parameter configuration value(s) may be specifically (and/or independently and/or differently) configured depending on whether PUCCH-based SL HARQ feedback reporting operation is configured. For example, whether or not the proposed rule of the present disclosure is applied and/or related parameter configuration value(s) may be configured specifically (and/or independently and/or differently) for the L1 source identifier when pre-emption is performed. For example, whether or not the proposed rule of the present disclosure is applied and/or related parameter configuration value(s) may be configured specifically (and/or independently and/or differently) for the L1 destination identifier when pre-emption is performed. For example, whether or not the proposed rule of the present disclosure is applied and/or related parameter configuration value(s) may be configured specifically (and/or independently and/or differently) for the L2 source identifier when pre-emption is performed. For example, whether or not the proposed rule of the present disclosure is applied and/or related parameter configuration value(s) may be configured specifically (and/or independently and/or differently) for the L2 destination identifier when pre-emption is performed. For example, whether or not the proposed rule of the present disclosure is applied and/or related parameter configuration value(s) may be configured specifically (and/or independently and/or differently) for the L1 source identifier when pre-emption-based resource reselection is performed. For example, whether or not the proposed rule of the present disclosure is applied and/or related parameter configuration value(s) may be configured specifically (and/or independently and/or differently) for the L1 destination identifier when pre-emption-based resource reselection is performed. For example, whether or not the proposed rule of the present disclosure is applied and/or related parameter configuration value(s) may be configured specifically (and/or independently and/or differently) for the L2 source identifier when pre-emption-based resource reselection is performed. For example, whether or not the proposed rule of the present disclosure is applied and/or related parameter configuration value(s) may be configured specifically (and/or independently and/or differently) for the L2 destination identifier when pre-emption-based resource reselection is performed. For example, whether or not the proposed rule of the present disclosure is applied and/or related parameter configuration value(s) may be configured specifically (and/or independently and/or differently) for the L1 source identifier when re-evaluation is performed. For example, whether or not the proposed rule of the present disclosure is applied and/or related parameter configuration value(s) may be configured specifically (and/or independently and/or differently) for the L1 destination identifier when re-evaluation is performed. For example, whether or not the proposed rule of the present disclosure is applied and/or related parameter configuration value(s) may be configured specifically (and/or independently and/or differently) for the L2 source identifier when re-evaluation is performed. For example, whether or not the proposed rule of the present disclosure is applied and/or related parameter configuration value(s) may be configured specifically (and/or independently and/or differently) for the L2 destination identifier when re-evaluation is performed. For example, whether or not the proposed rule of the present disclosure is applied and/or related parameter configuration value(s) may be configured specifically (and/or independently and/or differently) for the L1 source identifier when re-evaluation-based resource reselection is performed. For example, whether or not the proposed rule of the present disclosure is applied and/or related parameter configuration value(s) may be configured specifically (and/or independently and/or differently) for the L1 destination identifier when re-evaluation-based resource reselection is performed. For example, whether or not the proposed rule of the present disclosure is applied and/or related parameter configuration value(s) may be configured specifically (and/or independently and/or differently) for the L2 source identifier when re-evaluation-based resource reselection is performed. For example, whether or not the proposed rule of the present disclosure is applied and/or related parameter configuration value(s) may be configured specifically (and/or independently and/or differently) for the L2 destination identifier when re-evaluation-based resource reselection is performed. For example, whether or not the proposed rule of the present disclosure is applied and/or related parameter configuration value(s) may be configured specifically (and/or independently and/or differently) for identifiers related to L1 source ID and destination ID when pre-emption is performed. For example, whether or not the proposed rule of the present disclosure is applied and/or related parameter configuration value(s) may be configured specifically (and/or independently and/or differently) for identifiers related to L2 source ID and destination ID when pre-emption is performed. For example, whether or not the proposed rule of the present disclosure is applied and/or related parameter configuration value(s) may be configured specifically (and/or independently and/or differently) for identifiers related to L1 source ID and destination ID when pre-emption-based resource reselection is performed. For example, whether or not the proposed rule of the present disclosure is applied and/or related parameter configuration value(s) may be configured specifically (and/or independently and/or differently) for identifiers related to L2 source ID and destination ID when pre-emption-based resource reselection is performed. For example, whether or not the proposed rule of the present disclosure is applied and/or related parameter configuration value(s) may be configured specifically (and/or independently and/or differently) for identifiers related to L2 source ID and destination ID when re-evaluation is performed. For example, whether or not the proposed rule of the present disclosure is applied and/or related parameter configuration value(s) may be configured specifically (and/or independently and/or differently) for identifiers related to L2 source ID and destination ID when re-evaluation-based resource reselection is performed. For example, whether or not the proposed rule of the present disclosure is applied and/or related parameter configuration value(s) may be configured specifically (and/or independently and/or differently) for an identifier related to a combination of an L1 source ID and destination ID pair and a cast type when pre-emption is performed. For example, whether or not the proposed rule of the present disclosure is applied and/or related parameter configuration value(s) may be configured specifically (and/or independently and/or differently) for an identifier related to a combination of an L2 source ID and destination ID pair and a cast type when pre-emption is performed. For example, whether or not the proposed rule of the present disclosure is applied and/or related parameter configuration value(s) may be configured specifically (and/or independently and/or differently) for an identifier related to a combination of an L1 source ID and destination ID pair and a cast type when pre-emption-based resource reselection is performed. For example, whether or not the proposed rule of the present disclosure is applied and/or related parameter configuration value(s) may be configured specifically (and/or independently and/or differently) for an identifier related to a combination of an L2 source ID and destination ID pair and a cast type when pre-emption-based resource reselection is performed. For example, whether or not the proposed rule of the present disclosure is applied and/or related parameter configuration value(s) may be configured specifically (and/or independently and/or differently) for an identifier related to a combination of an L1 source ID and destination ID pair and a cast type when re-evaluation is performed. For example, whether or not the proposed rule of the present disclosure is applied and/or related parameter configuration value(s) may be configured specifically (and/or independently and/or differently) for an identifier related to a combination of an L2 source ID and destination ID pair and a cast type when re-evaluation is performed. For example, whether or not the proposed rule of the present disclosure is applied and/or related parameter configuration value(s) may be configured specifically (and/or independently and/or differently) for an identifier related to a combination of an L1 source ID and destination ID pair and a cast type when re-evaluation-based resource reselection is performed. For example, whether or not the proposed rule of the present disclosure is applied and/or related parameter configuration value(s) may be configured specifically (and/or independently and/or differently) for an identifier related to a combination of an L2 source ID and destination ID pair and a cast type when re-evaluation-based resource reselection is performed. For example, whether or not the proposed rule of the present disclosure is applied and/or related parameter configuration value(s) may be configured specifically (and/or independently and/or differently) for an identifier related to the direction of an L1 source ID and destination ID pair when pre-emption is performed. For example, whether or not the proposed rule of the present disclosure is applied and/or related parameter configuration value(s) may be configured specifically (and/or independently and/or differently) for an identifier related to the direction of an L2 source ID and destination ID pair when pre-emption is performed. For example, whether or not the proposed rule of the present disclosure is applied and/or related parameter configuration value(s) may be configured specifically (and/or independently and/or differently) for an identifier related to the direction of an L1 source ID and destination ID pair when pre-emption-based resource reselection is performed. For example, whether or not the proposed rule of the present disclosure is applied and/or related parameter configuration value(s) may be configured specifically (and/or independently and/or differently) for an identifier related to the direction of an L2 source ID and destination ID pair when pre-emption-based resource reselection is performed. For example, whether or not the proposed rule of the present disclosure is applied and/or related parameter configuration value(s) may be configured specifically (and/or independently and/or differently) for an identifier related to the direction of an L1 source ID and destination ID pair when re-evaluation is performed. For example, whether or not the proposed rule of the present disclosure is applied and/or related parameter configuration value(s) may be configured specifically (and/or independently and/or differently) for an identifier related to the direction of an L2 source ID and destination ID pair when re-evaluation is performed. For example, whether or not the proposed rule of the present disclosure is applied and/or related parameter configuration value(s) may be configured specifically (and/or independently and/or differently) for an identifier related to the direction of an L1 source ID and destination ID pair when re-evaluation-based resource reselection is performed. For example, whether or not the proposed rule of the present disclosure is applied and/or related parameter configuration value(s) may be configured specifically (and/or independently and/or differently) for an identifier related to the direction of an L2 source ID and destination ID pair when re-evaluation-based resource reselection is performed. For example, whether or not the proposed rule of the present disclosure is applied and/or related parameter configuration value(s) may be configured specifically (and/or independently and/or differently) for a PC5 RRC connection. For example, whether or not the proposed rule of the present disclosure is applied and/or related parameter configuration value(s) may be configured specifically (and/or independently and/or differently) for a PC5 RRC link. For example, whether or not the proposed rule of the present disclosure is applied and/or related parameter configuration value(s) may be configured specifically (and/or independently and/or differently) according to SL mode type when SL DRX is performed. For example, whether or not the proposed rule of the present disclosure is applied and/or related parameter configuration value(s) may be configured specifically (and/or independently and/or differently) according to an SL mode type associated with resource allocation mode 1 when SL DRX is performed. For example, whether or not the proposed rule of the present disclosure is applied and/or related parameter configuration value(s) may be configured specifically (and/or independently and/or differently) according to an SL mode type associated with resource allocation mode 2 when SL DRX is performed. For example, whether or not the proposed rule of the present disclosure is applied and/or related parameter configuration value(s) may be configured specifically (and/or independently and/or differently) according to SL mode type when SL DRX is supported. For example, whether or not the proposed rule of the present disclosure is applied and/or related parameter configuration value(s) may be configured specifically (and/or independently and/or differently) according to an SL mode type associated with resource allocation mode 1 when SL DRX is supported. For example, whether or not the proposed rule of the present disclosure is applied and/or related parameter configuration value(s) may be configured specifically (and/or independently and/or differently) according to an SL mode type associated with resource allocation mode 2 when SL DRX is supported. For example, whether or not the proposed rule of the present disclosure is applied and/or related parameter configuration value(s) may be configured specifically (and/or independently and/or differently) according to SL mode type when SL DRX is not performed.

For example, whether or not the proposed rule of the present disclosure is applied and/or related parameter configuration value(s) may be configured specifically (and/or independently and/or differently) according to an SL mode type associated with resource allocation mode 1 when SL DRX is not performed. For example, whether or not the proposed rule of the present disclosure is applied and/or related parameter configuration value(s) may be configured specifically (and/or independently and/or differently) according to an SL mode type associated with resource allocation mode 2 when SL DRX is not performed. For example, whether or not the proposed rule of the present disclosure is applied and/or related parameter configuration value(s) may be configured specifically (and/or independently and/or differently) according to SL mode type when SL DRX is not supported. For example, whether or not the proposed rule of the present disclosure is applied and/or related parameter configuration value(s) may be configured specifically (and/or independently and/or differently) according to an SL mode type associated with resource allocation mode 1 when SL DRX is not supported. For example, whether or not the proposed rule of the present disclosure is applied and/or related parameter configuration value(s) may be configured specifically (and/or independently and/or differently) according to an SL mode type associated with resource allocation mode 2 when SL DRX is not supported. For example, whether or not the proposed rule of the present disclosure is applied and/or related parameter configuration value(s) may be configured specifically (and/or independently and/or differently) for periodic resource reservation. For example, whether or not the proposed rule of the present disclosure is applied and/or related parameter configuration value(s) may be configured specifically (and/or independently and/or differently) for aperiodic resource reservation. For example, whether or not the proposed rule of the present disclosure is applied and/or related parameter configuration value(s) may be configured specifically (and/or independently and/or differently) according to a transmission (Tx) profile. For example, whether or not the proposed rule of the present disclosure is applied and/or related parameter configuration value(s) may be configured specifically (and/or independently and/or differently) for a Tx profile indicating a service supporting sidelink DRX operation. For example, whether or not the proposed rule of the present disclosure is applied and/or related parameter configuration value(s) may be configured specifically (and/or independently and/or differently) for a Tx profile indicating a service that does not need to support sidelink DRX operation.

The proposal and whether or not the proposal rule of the present disclosure is applied (and/or related parameter configuration value(s)) may also be applied to a mmWave SL operation.

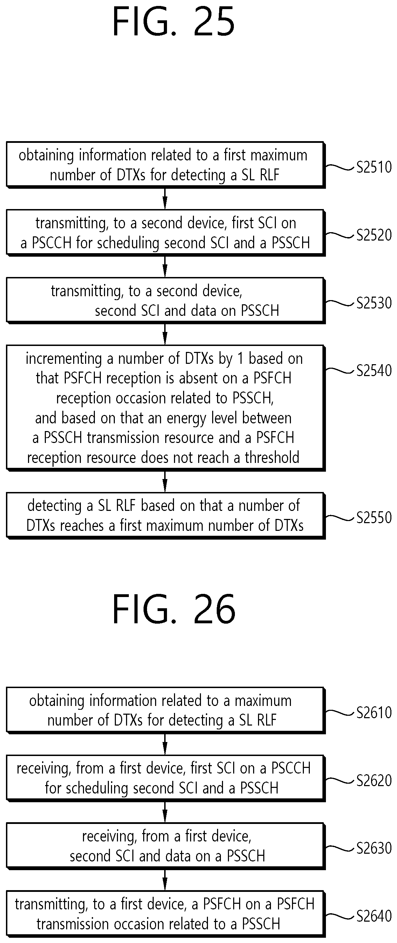

FIG. 25 shows a method for performing wireless communication by a first device, based on an embodiment of the present disclosure. The embodiment of FIG. 25 may be combined with various embodiments of the present disclosure.

Referring to FIG. 25, in step S2510, the first device may obtain information related to a first maximum number of discontinuous transmissions (DTXs) for detecting a sidelink radio link failure (SL RLF). In step S2520, the first device may transmit, to a second device, first sidelink control information (SCI) on a physical sidelink control channel (PSCCH) for scheduling second SCI and a physical sidelink shared channel (PSSCH). In step S2530, the first device may transmit, to the second device, the second SCI and data on the PSSCH. In step S2540, the first device may increment a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold. In step S2550, the first device may detect the SL RLF based on that the number of DTXs reaches the first maximum number of DTXs.

For example, the number of DTXs may not be incremented based on that the PSFCH reception is absent on the PSFCH reception occasion related to the PSSCH, and based on that the energy level between the PSSCH transmission resource and the PSFCH reception resource reaches the threshold.

For example, the number of DTXs may be re-initialized based on that the PSFCH reception is absent on the PSFCH reception occasion related to the PSSCH, and based on that the energy level between the PSSCH transmission resource and the PSFCH reception resource reaches the threshold.

For example, the energy level may be detected by the first device.

For example, the threshold may be configured per SL resource pool.

For example, the threshold may be configured per RB set.

For example, the threshold may be configured per SL-CAPC value.

For example, the threshold may be configured per channel busy ratio (CBR).

For example, a listen before talk (LBT) type related to a gap between the PSSCH transmission resource and the PSFCH reception resource may be transmitted through the first SCI, the second SCI, a medium access control control element (MAC CE), or a PC5-radio resource control (PC5-RRC) message.

For example, information related to a second maximum number of DTXs for requesting information related to a number of PSFCH transmissions that the second UE does not perform based on that LBT failure may be obtained.

For example, based on that the number of DTXs reaches the second maximum number of DTXs, information related to the number of PSFCH transmissions that is not performed may be requested from the second UE.

For example, the second maximum number of DTXs may be configured independently from the first maximum number of DTXs.

For example, the second maximum number of DTXs may be less than or equal to the first maximum number of DTXs.

For example, based on that the second maximum number of DTXs is related to a threshold of sidelink channel quality based on CSI reporting, the number of DTXs may be incremented by 1 based on the CSI reporting-based sidelink channel quality.

For example, based on that the second maximum number of DTXs is related to a channel busy ratio (CBR) measurement in a resource pool, the number of DTXs may be incremented by 1 based on the CBR measurement value in the resource pool.

The proposed method may be applied to the device according to various embodiments of the present disclosure. First, the processor 102 of the first device 100 may obtain information related to a first maximum number of discontinuous transmissions (DTXs) for detecting a sidelink radio link failure (SL RLF). In addition, the processor 102 of the first device 100 may control the transceiver 106 to transmit, to a second device, first sidelink control information (SCI) on a physical sidelink control channel (PSCCH) for scheduling second SCI and a physical sidelink shared channel (PSSCH). In addition, the processor 102 of the first device 100 may control the transceiver 106 to transmit, to the second device, the second SCI and data on the PSSCH. In addition, the processor 102 of the first device 100 may increment a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold. In addition, the processor 102 of the first device 100 may detect the SL RLF based on that the number of DTXs reaches the first maximum number of DTXs.

According to an embodiment of the present disclosure, a first device configured to perform wireless communication may be provided. For example, the first device may include: at least one transceiver; at least one processor; and at least one memory connected to the at least one processor and storing instructions. For example, the instructions, based on being executed by the at least one processor, cause the first device to perform operations comprising: obtaining information related to a first maximum number of discontinuous transmissions (DTXs) for detecting a sidelink radio link failure (SL RLF); transmitting, to a second device, first sidelink control information (SCI) on a physical sidelink control channel (PSCCH) for scheduling second SCI and a physical sidelink shared channel (PSSCH); transmitting, to the second device, the second SCI and data on the PSSCH; incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and detecting the SL RLF based on that the number of DTXs reaches the first maximum number of DTXs.

According to an embodiment of the present disclosure, a processing device configured to control a first device may be provided. The processing may include: at least one processor; and at least one memory connected to the at least one processor and storing instructions. For example, the instructions, based on being executed by the at least one processor, cause the first device to perform operations comprising: obtaining information related to a first maximum number of discontinuous transmissions (DTXs) for detecting a sidelink radio link failure (SL RLF); transmitting, to a second device, first sidelink control information (SCI) on a physical sidelink control channel (PSCCH) for scheduling second SCI and a physical sidelink shared channel (PSSCH); transmitting, to the second device, the second SCI and data on the PSSCH; incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and detecting the SL RLF based on that the number of DTXs reaches the first maximum number of DTXs.

According to an embodiment of the present disclosure, a non-transitory computer-readable storage medium storing instructions may be provided. For example, the instructions, based on being executed, cause a first device to perform operations comprising: obtaining information related to a first maximum number of discontinuous transmissions (DTXs) for detecting a sidelink radio link failure (SL RLF); transmitting, to a second device, first sidelink control information (SCI) on a physical sidelink control channel (PSCCH) for scheduling second SCI and a physical sidelink shared channel (PSSCH); transmitting, to the second device, the second SCI and data on the PSSCH; incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and detecting the SL RLF based on that the number of DTXs reaches the first maximum number of DTXs.

FIG. 26 shows a method for performing wireless communication by a second device, based on an embodiment of the present disclosure. The embodiment of FIG. 26 may be combined with various embodiments of the present disclosure.

Referring to FIG. 26, in step S2610, the second device may obtain information related to a maximum number of discontinuous transmissions (DTXs) for detect a sidelink radio link failure (SL RLF). In step S2620, the second device may receive, from a first device, first sidelink control information (SCI) on a physical sidelink control channel (PSCCH) for scheduling second SCI and a physical sidelink shared channel (PSSCH). In step S2630, the second device may receive, from the first device, the second SCI and data on the PSSCH. In step S2640, the second device may transmit, to the first device, a physical sidelink feedback channel (PSFCH) on a PSFCH transmission occasion related to the PSSCH. For example, the SL RLF may be detected based on that a number of DTXs reaches the maximum number of DTXs. For example, the number of DTXs may be incremented by 1 based on a transmission related to the PSFCH is absent on the PSFCH transmission occasion, and based on that an energy level between a PSSCH transmission resource and a PSFCH reception resource does not reach a threshold.

The proposed method may be applied to the device according to various embodiments of the present disclosure. First, the processor 202 of the second device 200 may obtain information related to a maximum number of discontinuous transmissions (DTXs) for detect a sidelink radio link failure (SL RLF). In addition, the processor 202 of the second device 200 may control the transceiver 206 to receive, from a first device, first sidelink control information (SCI) on a physical sidelink control channel (PSCCH) for scheduling second SCI and a physical sidelink shared channel (PSSCH). In addition, the processor 202 of the second device 200 may control the transceiver 206 to receive, from the first device, the second SCI and data on the PSSCH. In addition, the processor 202 of the second device 200 may control the transceiver 206 to transmit, to the first device, a physical sidelink feedback channel (PSFCH) on a PSFCH transmission occasion related to the PSSCH. For example, the SL RLF may be detected based on that a number of DTXs reaches the maximum number of DTXs. For example, the number of DTXs may be incremented by 1 based on a transmission related to the PSFCH is absent on the PSFCH transmission occasion, and based on that an energy level between a PSSCH transmission resource and a PSFCH reception resource does not reach a threshold.

According to an embodiment of the present disclosure, a second device configured to perform wireless communication may be provided. For example, the second device may include: at least one transceiver; at least one processor; and at least one memory connected to the at least one processor and storing instructions. For example, the instructions, based on being executed by the at least one processor, cause the second device to perform operations comprising: obtaining information related to a maximum number of discontinuous transmissions (DTXs) for detecting a sidelink radio link failure (SL RLF); receiving, from a first device, first sidelink control information (SCI) on a physical sidelink control channel (PSCCH) for scheduling second SCI and a physical sidelink shared channel (PSSCH); receiving, from the first device, the second SCI and data on the PSSCH; transmitting, to the first device, a physical sidelink feedback channel (PSFCH) on a PSFCH transmission occasion related to the PSSCH. For example, the SL RLF may be detected based on that a number of DTXs reaches the maximum number of DTXs. For example, the number of DTXs may be incremented by 1 based on a transmission related to the PSFCH is absent on the PSFCH transmission occasion, and based on that an energy level between a PSSCH transmission resource and a PSFCH reception resource does not reach a threshold.

According to an embodiment of the present disclosure, a processing device configured to control a second device may be provided. The processing may include: at least one processor; and at least one memory connected to the at least one processor and storing instructions. For example, the instructions, based on being executed by the at least one processor, cause the second device to perform operations comprising: obtaining information related to a maximum number of discontinuous transmissions (DTXs) for detecting a sidelink radio link failure (SL RLF); receiving, from a first device, first sidelink control information (SCI) on a physical sidelink control channel (PSCCH) for scheduling second SCI and a physical sidelink shared channel (PSSCH); receiving, from the first device, the second SCI and data on the PSSCH; transmitting, to the first device, a physical sidelink feedback channel (PSFCH) on a PSFCH transmission occasion related to the PSSCH. For example, the SL RLF may be detected based on that a number of DTXs reaches the maximum number of DTXs. For example, the number of DTXs may be incremented by 1 based on a transmission related to the PSFCH is absent on the PSFCH transmission occasion, and based on that an energy level between a PSSCH transmission resource and a PSFCH reception resource does not reach a threshold.

According to an embodiment of the present disclosure, a non-transitory computer-readable storage medium storing instructions may be provided. For example, the instructions, based on being executed, cause a second device to perform operations comprising: obtaining information related to a maximum number of discontinuous transmissions (DTXs) for detecting a sidelink radio link failure (SL RLF); receiving, from a first device, first sidelink control information (SCI) on a physical sidelink control channel (PSCCH) for scheduling second SCI and a physical sidelink shared channel (PSSCH); receiving, from the first device, the second SCI and data on the PSSCH; transmitting, to the first device, a physical sidelink feedback channel (PSFCH) on a PSFCH transmission occasion related to the PSSCH. For example, the SL RLF may be detected based on that a number of DTXs reaches the maximum number of DTXs. For example, the number of DTXs may be incremented by 1 based on a transmission related to the PSFCH is absent on the PSFCH transmission occasion, and based on that an energy level between a PSSCH transmission resource and a PSFCH reception resource does not reach a threshold.

The various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

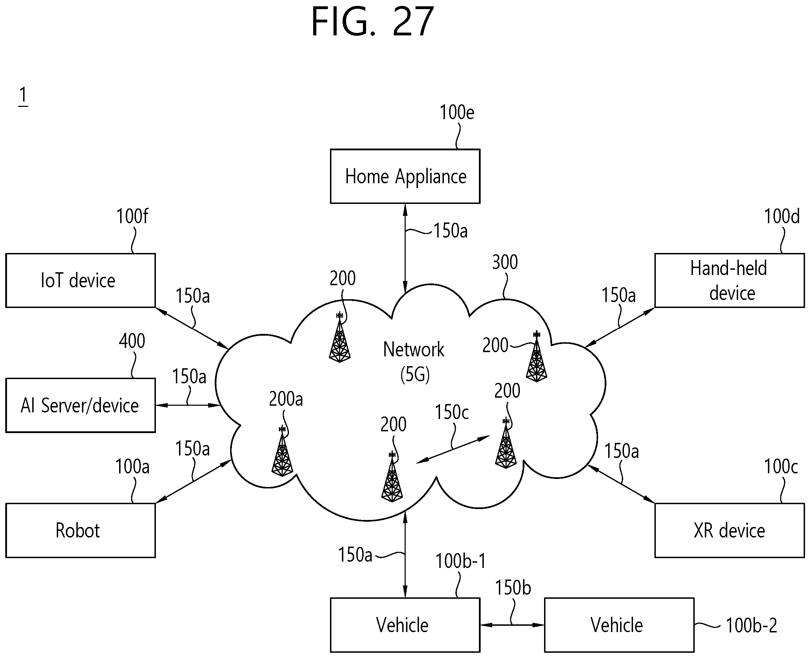

FIG. 27 shows a communication system 1, based on an embodiment of the present disclosure. The embodiment of FIG. 27 may be combined with various embodiments of the present disclosure.

Referring to FIG. 27, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to- Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

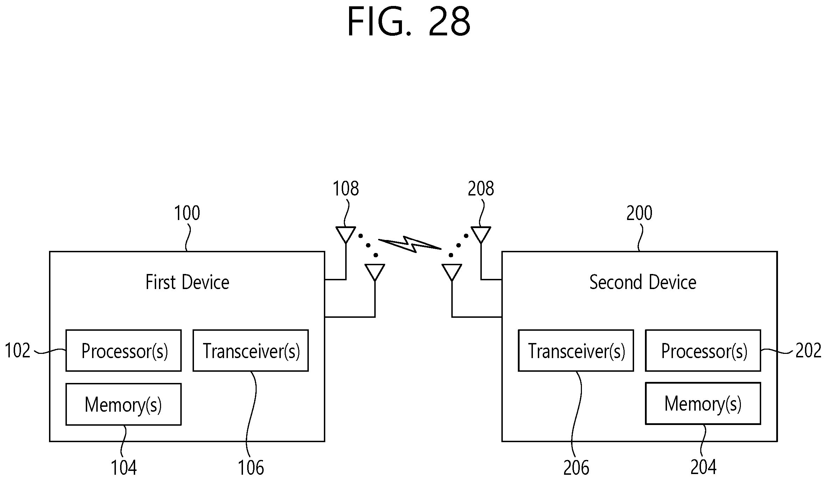

FIG. 28 shows wireless devices, based on an embodiment of the present disclosure. The embodiment of FIG. 28 may be combined with various embodiments of the present disclosure.

Referring to FIG. 28, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 27.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), RandomAccess Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

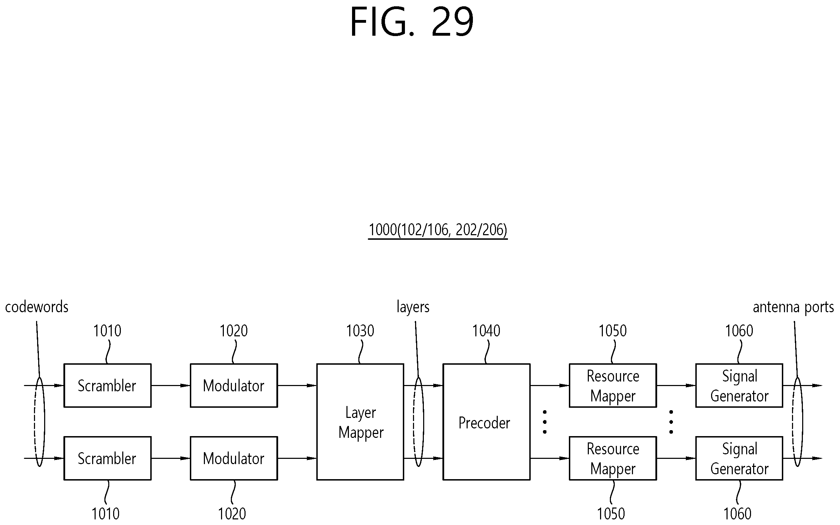

FIG. 29 shows a signal process circuit for a transmission signal, based on an embodiment of the present disclosure. The embodiment of FIG. 29 may be combined with various embodiments of the present disclosure.

Referring to FIG. 29, a signal processing circuit 1000 may include scramblers 1010, modulators 1020, a layer mapper 1030, a precoder 1040, resource mappers 1050, and signal generators 1060. An operation/function of FIG. 29 may be performed, without being limited to, the processors 102 and 202 and/or the transceivers 106 and 206 of FIG. 28. Hardware elements of FIG. 29 may be implemented by the processors 102 and 202 and/or the transceivers 106 and 206 of FIG. 28. For example, blocks 1010 to 1060 may be implemented by the processors 102 and 202 of FIG. 28. Alternatively, the blocks 1010 to 1050 may be implemented by the processors 102 and 202 of FIG. 28 and the block 1060 may be implemented by the transceivers 106 and 206 of FIG. 28.

Codewords may be converted into radio signals via the signal processing circuit 1000 of FIG. 29. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 29. For example, the wireless devices (e.g., 100 and 200 of FIG. 28) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

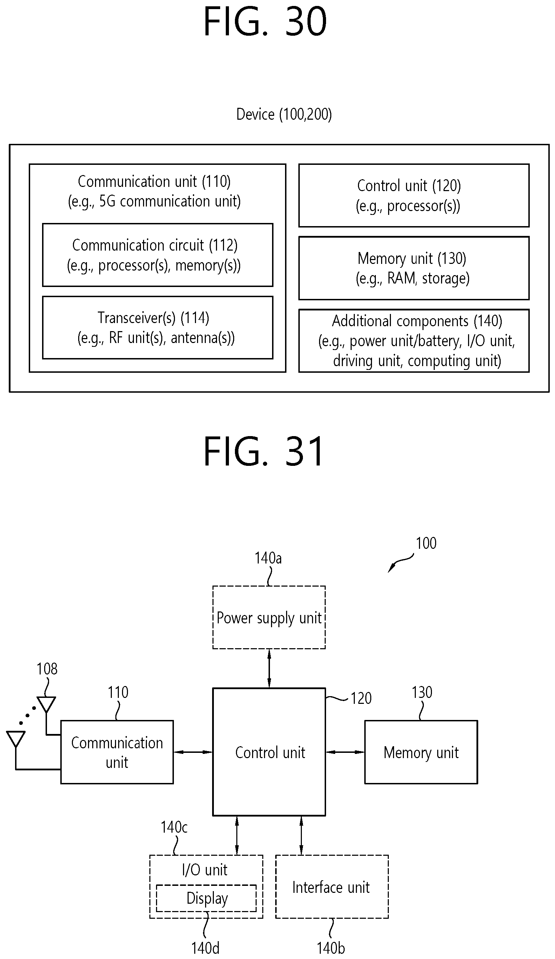

FIG. 30 shows another example of a wireless device, based on an embodiment of the present disclosure. The wireless device may be implemented in various forms according to a use-case/service (refer to FIG. 27). The embodiment of FIG. 30 may be combined with various embodiments of the present disclosure.

Referring to FIG. 30, wireless devices 100 and 200 may correspond to the wireless devices 100 and 200 of FIG. 28 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 28. For example, the transceiver(s) 114 may include the one or more transceivers 106 and 206 and/or the one or more antennas 108 and 208 of FIG. 28. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 27), the vehicles (100b-1 and 100b-2 of FIG. 27), the XR device (100c of FIG. 27), the hand-held device (100d of FIG. 27), the home appliance (100e of FIG. 27), the IoT device (100f of FIG. 27), a digital broadcast terminal, a hologram device, a public safety device, an MTC device, a medicine device, a fintech device (or a finance device), a security device, a climate/environment device, the AI server/device (400 of FIG. 27), the BSs (200 of FIG. 27), a network node, etc. The wireless device may be used in a mobile or fixed place according to a use-example/service.

In FIG. 30, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 30 will be described in detail with reference to the drawings.

FIG. 31 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 31 may be combined with various embodiments of the present disclosure.

Referring to FIG. 31, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 30, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

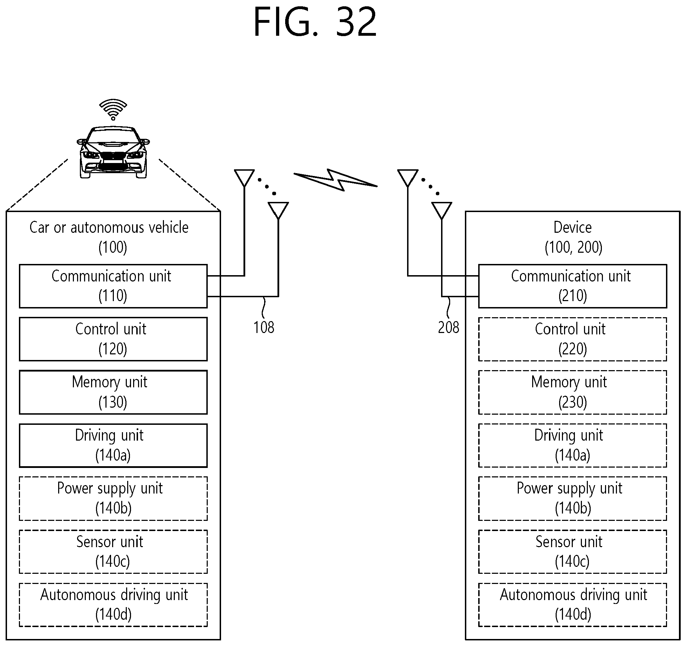

FIG. 32 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 32 may be combined with various embodiments of the present disclosure.

Referring to FIG. 32, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 30, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first device in a wireless communication system, the method comprising:
obtaining information related to a first maximum number of discontinuous transmissions (DTXs) for detecting a sidelink radio link failure (SL RLF);
transmitting, to a second device, first sidelink control information (SCI) on a physical sidelink control channel (PSCCH) for scheduling second SCI and a physical sidelink shared channel (PSSCH);
transmitting, to the second device, the second SCI and data on the PSSCH;
incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and
detecting the SL RLF based on that the number of DTXs reaches the first maximum number of DTXs.

2. The method of claim 1,
wherein the number of DTXs is not incremented based on that the PSFCH reception is absent on the PSFCH reception occasion related to the PSSCH, and based on that the energy level between the PSSCH transmission resource and the PSFCH reception resource reaches the threshold.

3. The method of claim 1,
wherein the number of DTXs is re-initialized based on that the PSFCH reception is absent on the PSFCH reception occasion related to the PSSCH, and based on that the energy level between the PSSCH transmission resource and the PSFCH reception resource reaches the threshold.

4. The method of claim 1,
wherein the energy level is detected by the first device.

5. The method of claim 1,
wherein the threshold is configured per SL resource pool.

6. The method of claim 1,
wherein the threshold is configured per RB set.

7. The method of claim 1,
wherein the threshold is configured per SL-CAPC value.

8. The method of claim 1,
wherein the threshold is configured per channel busy ratio (CBR).

9. The method of claim 1,
wherein a listen before talk (LBT) type related to a gap between the PSSCH transmission resource and the PSFCH reception resource is transmitted through the first SCI, the second SCI, a medium access control control element (MAC CE), or a PC5-radio resource control (PC5-RRC) message.

10. The method of claim 1,
wherein information related to a second maximum number of DTXs for requesting information related to a number of PSFCH transmissions that the second UE does not perform based on that LBT failure is obtained,
wherein, based on that the number of DTXs reaches the second maximum number of DTXs, information related to the number of PSFCH transmissions that is not performed is requested from the second UE; and
wherein the second maximum number of DTXs is configured independently from the first maximum number of DTXs.

11. The method of claim 10,
wherein the second maximum number of DTXs is less than or equal to the first maximum number of DTXs.

12. The method of claim 10,
wherein, based on that the second maximum number of DTXs is related to a threshold of sidelink channel quality based on CSI reporting, the number of DTXs is incremented by 1 based on the CSI reporting-based sidelink channel quality.

13. The method of claim 10,
wherein, based on that the second maximum number of DTXs is related to a channel busy ratio (CBR) measurement in a resource pool, the number of DTXs is incremented by 1 based on the CBR measurement value in the resource pool.

14. A first device configured to perform wireless communication, the first device comprising:
at least one transceiver;
at least one processor; and
at least one memory connected to the at least one processor and storing instructions that, based on being executed by the at least one processor, cause the first device to perform operations comprising:
obtaining information related to a first maximum number of discontinuous transmissions (DTXs) for detecting a sidelink radio link failure (SL RLF),
transmitting, to a second device, first sidelink control information (SCI) on a physical sidelink control channel (PSCCH) for scheduling second SCI and a physical sidelink shared channel (PSSCH);
transmitting, to the second device, the second SCI and data on the PSSCH;
incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and
detecting the SL RLF based on that the number of DTXs reaches the first maximum number of DTXs.

15. A processing device configured to control a first device, the processing device comprising:
at least one processor; and
at least one memory connected to the at least one processor and storing instructions that, based on being executed by the at least one processor, cause the first device to perform operations comprising:
obtaining information related to a first maximum number of discontinuous transmissions (DTXs) for detecting a sidelink radio link failure (SL RLF),
transmitting, to a second device, first sidelink control information (SCI) on a physical sidelink control channel (PSCCH) for scheduling second SCI and a physical sidelink shared channel (PSSCH);
transmitting, to the second device, the second SCI and data on the PSSCH;
incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and
detecting the SL RLF based on that the number of DTXs reaches the first maximum number of DTXs.

16. A non-transitory computer-readable storage medium storing instructions that, based on being executed, cause a first device to perform operations comprising:
obtaining information related to a first maximum number of discontinuous transmissions (DTXs) for detecting a sidelink radio link failure (SL RLF),
transmitting, to a second device, first sidelink control information (SCI) on a physical sidelink control channel (PSCCH) for scheduling second SCI and a physical sidelink shared channel (PSSCH);
transmitting, to the second device, the second SCI and data on the PSSCH;
incrementing a number of DTXs by 1 based on that PSFCH reception is absent on a physical sidelink feedback channel (PSFCH) reception occasion related to the PSSCH, and based on that an energy level between a PSSCH transmission resource and a PSFCH reception resource does not reach a threshold; and
detecting the SL RLF based on that the number of DTXs reaches the first maximum number of DTXs.

17. A method performed by a second device in a wireless communication system, the method comprising:
obtaining information related to a maximum number of discontinuous transmissions (DTXs) for detecting a sidelink radio link failure (SL RLF);
receiving, from a first device, first sidelink control information (SCI) on a physical sidelink control channel (PSCCH) for scheduling second SCI and a physical sidelink shared channel (PSSCH);
receiving, from the first device, the second SCI and data on the PSSCH;
transmitting, to the first device, a physical sidelink feedback channel (PSFCH) on a PSFCH transmission occasion related to the PSSCH,
wherein the SL RLF is detected based on that a number of DTXs reaches the maximum number of DTXs, and
wherein the number of DTXs is incremented by 1 based on a transmission related to the PSFCH is absent on the PSFCH transmission occasion, and based on that an energy level between a PSSCH transmission resource and a PSFCH reception resource does not reach a threshold.

18. A second device configured to perform wireless communication, the second device comprising:
at least one transceiver;
at least one processor; and
at least one memory connected to the at least one processor and storing instructions that, based on being executed by the at least one processor, cause the second device to perform operations comprising:
obtaining information related to a maximum number of discontinuous transmissions (DTXs) for detecting a sidelink radio link failure (SL RLF);
receiving, from a first device, first sidelink control information (SCI) on a physical sidelink control channel (PSCCH) for scheduling second SCI and a physical sidelink shared channel (PSSCH);
receiving, from the first device, the second SCI and data on the PSSCH;
transmitting, to the first device, a physical sidelink feedback channel (PSFCH) on a PSFCH transmission occasion related to the PSSCH,
wherein the SL RLF is detected based on that a number of DTXs reaches the maximum number of DTXs, and
wherein the number of DTXs is incremented by 1 based on a transmission related to the PSFCH is absent on the PSFCH transmission occasion, and based on that an energy level between a PSSCH transmission resource and a PSFCH reception resource does not reach a threshold.

19. A processing device configured to control a second device, the processing device comprising:
at least one processor; and
at least one memory connected to the at least one processor and storing instructions that, based on being executed by the at least one processor, cause the second device to perform operations comprising:
obtaining information related to a maximum number of discontinuous transmissions (DTXs) for detecting a sidelink radio link failure (SL RLF);
receiving, from a first device, first sidelink control information (SCI) on a physical sidelink control channel (PSCCH) for scheduling second SCI and a physical sidelink shared channel (PSSCH);
receiving, from the first device, the second SCI and data on the PSSCH;
transmitting, to the first device, a physical sidelink feedback channel (PSFCH) on a PSFCH transmission occasion related to the PSSCH,
wherein the SL RLF is detected based on that a number of DTXs reaches the maximum number of DTXs, and
wherein the number of DTXs is incremented by 1 based on a transmission related to the PSFCH is absent on the PSFCH transmission occasion, and based on that an energy level between a PSSCH transmission resource and a PSFCH reception resource does not reach a threshold.

20. A non-transitory computer-readable storage medium storing instructions that, based on being executed, cause a second device to perform operations comprising:
obtaining information related to a maximum number of discontinuous transmissions (DTXs) for detecting a sidelink radio link failure (SL RLF);
receiving, from a first device, first sidelink control information (SCI) on a physical sidelink control channel (PSCCH) for scheduling second SCI and a physical sidelink shared channel (PSSCH);
receiving, from the first device, the second SCI and data on the PSSCH,
transmitting, to the first device, a physical sidelink feedback channel (PSFCH) on a PSFCH transmission occasion related to the PSSCH,
wherein the SL RLF is detected based on that a number of DTXs reaches the maximum number of DTXs, and
wherein the number of DTXs is incremented by 1 based on a transmission related to the PSFCH is absent on the PSFCH transmission occasion, and based on that an energy level between a PSSCH transmission resource and a PSFCH reception resource does not reach a threshold.
